(19) Europäisches Patentamt
European Patent Office
Office européen des brevets

(11) **EP 4 700 346 A1**

(12) **EUROPEAN PATENT APPLICATION**
published in accordance with Art. 153(4) EPC

(43) Date of publication:
**25.02.2026 Bulletin 2026/09**

(21) Application number: **24792449.1**

(22) Date of filing: **26.03.2024**

(51) International Patent Classification (IPC):
**G01J 3/45** (2006.01)       **G01N 21/35** (2014.01)
**G01N 21/45** (2006.01)

(52) Cooperative Patent Classification (CPC):
**G01J 3/45; G01N 21/35; G01N 21/45**

(86) International application number:
**PCT/JP2024/011947**

(87) International publication number:
**WO 2024/219173 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.04.2023 JP 2023070144**

(71) Applicant: **KYOTO UNIVERSITY**
**Kyoto 606-8501 (JP)**

(72) Inventors:
• **TAKEUCHI, Shigeki**
 **Kyoto-shi, Kyoto 606-8501 (JP)**
• **MUKAI, Yu**
 **Kyoto-shi, Kyoto 606-8501 (JP)**
• **OKAMOTO, Ryo**
 **Kyoto-shi, Kyoto 606-8501 (JP)**

(74) Representative: **Bals & Vogel Patentanwälte PartGmbB**
**Konrad-Zuse-Str. 4**
**44801 Bochum (DE)**

(54) **QUANTUM ABSORPTION SPECTROSCOPY METHOD AND QUANTUM ABSORPTION SPECTROSCOPY SYSTEM**

(57)     A quantum absorption spectroscopy method includes first to third steps. The first step is outputting pump light to a quantum interferometer (2), the pump light being at least one of pulsed light and broadband light. The quantum interferometer (2) is configured to cause quantum interference between a plurality of physical processes in each of which an entangled photon pair of a signal photon and an idler photon is generated from the pump light, and a sample is disposed on a propagation path of the idler photon. The second step is acquiring at least one quantum interference signal from the quantum interferometer (2). Each of the at least one quantum interference signal is a signal corresponding to the number of the signal photon detected by a photodetector (3) when a phase of one of the signal photon and the idler photon is changed. The third step is calculating an absorption spectroscopy characteristic of the sample based on at least one Fourier spectrum obtained by Fourier transform of the at least one quantum interference signal.

FIG.3

EP 4 700 346 A1

## Description

TECHNICAL FIELD

The present disclosure relates to a quantum absorption spectroscopy method and a quantum absorption spectroscopy system.

BACKGROUND ART

In recent years, in the field of quantum technology, research has been underway to achieve a new function using a "quantum entangled" photon pair in which two photons have a quantum mechanical correlation. Hereinafter, such a photon pair will also be referred to as "entangled photon pair". The technique of applying an entangled photon pair to spectroscopy has been proposed. WO 2021/117632 (PTL 1) and WO 2022/186383 (PTL 2) each disclose a system and a method for quantum absorption spectroscopy by the present inventors.

CITATION LIST

PATENT LITERATURE

> PTL 1: WO 2021/117632
> PTL 2: WO 2022/186383

NON PATENT LITERATURE

> NPL 1: Chiara Lindner, Jachin Kunz, Simon J. Herr, Jens Kiessling, Sebastian Wolf, and Frank Kuhnemann. High-sensitivity quantum sensing with pump-enhanced spontaneous parametric down-conversion. https://doi.org/10.48550/arXiv.2208.07595.
> NPL 2: Satoshi Ashihara, Sachi Fujioka, and Kazunori Shibuya. Temperature dependence of vibrational relaxation of the OH bending excitation in liquid H2O. Chemical Physics Letters 502 (2011) 57-62.

SUMMARY OF INVENTION

TECHNICAL PROBLEM

Quantum absorption spectroscopy has various applications. In an application, a high spectral resolution may be requested. In another application, a broad spectral bandwidth may be requested. The present inventors have studied quantum absorption spectroscopy from theoretical and experimental perspectives, and as a result, have found that performance corresponding to an application of quantum absorption spectroscopy can be improved by employing appropriate light as pump light for generating an entangled photon pair.

The present disclosure has been made to solve the above-described problem and one object of the present disclosure is to improve performance corresponding to an application of quantum absorption spectroscopy.

SOLUTION TO PROBLEM

A quantum absorption spectroscopy method according to a first aspect of the present disclosure includes first to third steps. The first step is outputting pump light to a quantum interferometer, the pump light being at least one of pulsed light and broadband light. The quantum interferometer is configured to cause quantum interference between a plurality of physical processes in each of which an entangled photon pair of a signal photon and an idler photon is generated from the pump light, and a sample is disposed on a propagation path of the idler photon. The second step is acquiring at least one quantum interference signal from the quantum interferometer. Each of the at least one quantum interference signal is a signal corresponding to the number of the signal photon detected by a photodetector when a phase of one of the signal photon and the idler photon is changed. The third step is calculating an absorption spectroscopy characteristic of the sample based on at least one Fourier spectrum obtained by Fourier transform of the at least one quantum interference signal.

A quantum absorption spectroscopy system according to a second aspect of the present disclosure includes: a light source; a quantum interferometer; a photodetector; and a processor. The light source emits pump light, the pump light being at least one of pulsed light and broadband light. The quantum interferometer is configured to cause quantum interference between a plurality of physical processes in each of which an entangled photon pair of a signal photon and an idler photon is generated from the pump light, and a sample is disposed on a propagation path of the idler photon. The photodetector detects the signal photon. The processor is configured to calculate an absorption spectroscopy characteristic of the sample based on a result of detection by the photodetector. The processor is configured to: acquire at least one quantum interference signal from the quantum interferometer, each of the at least one quantum interference signal being a signal corresponding to the number of the signal photon detected by the photodetector when a phase of one of the signal photon and the idler photon is changed, and calculate the absorption spectroscopy characteristic based on at least one Fourier spectrum obtained by Fourier transform of the at least one quantum interference signal.

ADVANTAGEOUS EFFECTS OF INVENTION

According to the present disclosure, performance corresponding to an application of quantum absorption spectroscopy can be improved.

BRIEF DESCRIPTION OF DRAWINGS

Fig. 1 shows an example of an overall configuration of a quantum absorption spectroscopy system according to a first embodiment.
Fig. 2 shows a typical configuration example of a controller.
Fig. 3 is a flowchart showing a first example of a process procedure of a quantum absorption spectroscopy method in the first embodiment.
Fig. 4 is a flowchart showing a second example of the process procedure of the quantum absorption spectroscopy method in the first embodiment.
Fig. 5 is a flowchart showing a third example of the process procedure of the quantum absorption spectroscopy method in the first embodiment.
Fig. 6 shows comparison between CW light and pulsed light.
Fig. 7 is a diagram for illustrating a correlation between a signal frequency and an idler frequency.
Fig. 8 is a conceptual diagram for illustrating an experiment method about a spectral resolution.
Fig. 9 shows an example of an interference structure based on simulation.
Fig. 10 shows an example of a result of evaluation of the spectral resolution in CW excitation based on actual measurement.
Fig. 11 shows an example of a result of evaluation of the spectral resolution in pulse excitation based on actual measurement.
Fig. 12 shows an example of a measurement result indicating degradation of a spectral resolution when a spectrometer is used.
Fig. 13 shows an example of an overall configuration of a quantum absorption spectroscopy system according to a modification of the first embodiment.
Fig. 14 shows an example of an overall configuration of a quantum absorption spectroscopy system according to a second embodiment.
Fig. 15 shows an example of an overall configuration of a quantum absorption spectroscopy system according to a third embodiment.
Fig. 16 shows an example of an overall configuration of a quantum absorption spectroscopy system according to a fourth embodiment.
Fig. 17 shows an example of an overall configuration of a quantum absorption spectroscopy system according to a fifth embodiment.
Fig. 18 is a flowchart showing an example of a process procedure of a quantum absorption spectroscopy method in the fifth embodiment.
Fig. 19 shows an example of simulation results about a difference in entangled photon pair generation band, which is caused by a difference in pump light source.
Fig. 20 is a diagram for illustrating a size of an entangled photon pair generation band, when a narrowband light source is used.
Fig. 21 is a diagram for illustrating a size of an entangled photon pair generation band, when a broadband light source is used.

DESCRIPTION OF EMBODIMENTS

[Description of Terms]

In the present disclosure and embodiments thereof, "ultraviolet range" refers to a wavelength range of 10 nm to 360 nm. "Visible range" refers to a wavelength range of 360 nm to 1050 nm. "Near-infrared range" refers to a wavelength range of 1050 nm to 2 μm. "Mid-infrared range" refers to a wavelength range of 2 μm to 5 μm. "Far-infrared range" refers to a wavelength range of 5 μm to 20 μm. "Ultra-far infrared range" refers to a wavelength range of 20 μm to 1 mm. "Infrared range" may include all of the near-infrared range, the mid-infrared range, the far-infrared range, and the ultra-far infrared range.

In the present disclosure and embodiments thereof, "spectral resolution" refers to the ability to separate two adjacent peaks from each other on a Fourier spectrum obtained by quantum absorption spectroscopy. The spectral resolution may be a frequency resolution (angular frequency resolution), or may be a wavenumber resolution, or may be a wavelength resolution, depending on a parameter used in the horizontal axis of the Fourier spectrum.

In the present disclosure and embodiments thereof, "broadband light" (light with a broadband) typically refers to light having a spectral line width (full width at half maximum) greater than 5 nm, preferably refers to light having a spectral line width greater than 10 nm, more preferably refers to light having a spectral line width greater than 20 nm, and further preferably refers to light having a spectral line width greater than 30 nm. "Broadband light" may be light formed by combining a plurality of narrowband lights. As an example, light formed by combining first light having a spectral line width of 0.1 nm and a center wavelength of 500 nm, second light having a spectral line width of 0.1 nm and a center wavelength of 530 nm, and third light having a spectral line width of 0.1 nm and a center wavelength of 560 nm has a spectral line width of about 60 nm, and thus, may be included in "broadband light". "Broadband light" includes both pulsed light and continuous light. "Broadband continuous light" refers to light that is continuous, of the broadband light. On the other hand, "narrowband light" (light in a narrow band) typically refers to light having a spectral line width smaller than 5 nm.

In the embodiments below, a configuration for measuring an absorption spectroscopy characteristic of a sample in the infrared range (particularly, the mid-infrared range) by a quantum absorption spectroscopy system according to the present disclosure will be described. Spectroscopy in the infrared range using Fourier transform by a quantum absorption spectroscopy system as described in PTL 1 is also referred to as "quantum-Fourier transform infrared spectroscopy" (Q-FTIR). However, the wavelength range that can be measured by the quantum absorption spectroscopy system according to the present disclosure is not limited to the infrared range, and may be the ultraviolet range or the visible range.

Hereinafter, the embodiments of the present disclosure will be described in detail with reference to the drawings. In the drawings, the same or corresponding portions are denoted by the same reference characters and description thereof will not be repeated.

[First Embodiment]

In a first embodiment (followed by first to fourth embodiments), a configuration in which a pump light source for generating an entangled photon pair is a pulsed light source (a laser light source that emits pulsed light) will be described. By employing the pulsed light source, time-resolved quantum absorption spectroscopy that tracks a temporal change of a sample (e.g., a time response of the sample to an external stimulus) becomes possible as described below.

<System Configuration>

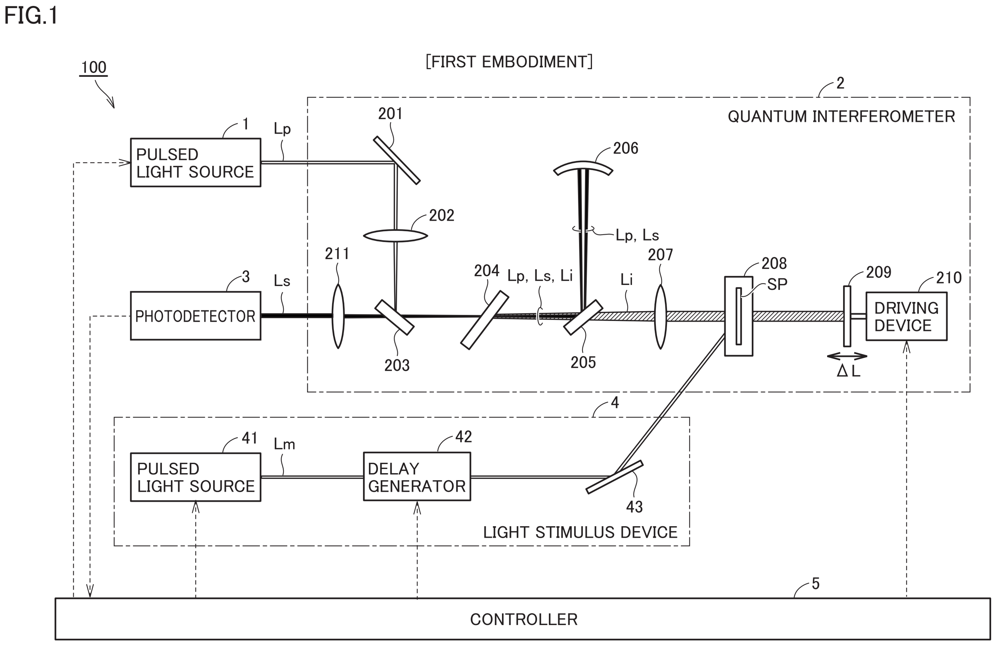

Fig. 1 shows an example of an overall configuration of a quantum absorption spectroscopy system according to a first embodiment. A quantum absorption spectroscopy system 100 is configured to measure an absorption spectroscopy characteristic of a sample in the infrared range. The absorption spectroscopy characteristic that can be measured by quantum absorption spectroscopy system 100 includes a transmittance spectrum, a complex transmittance spectrum, an absorption spectrum, and the like. Quantum absorption spectroscopy system 100 includes a pulsed light source 1, a quantum interferometer 2, a photodetector 3, a light stimulus device 4, and a controller 5.

Pulsed light source 1 emits pulsed laser light for generating an entangled photon pair of a signal photon and an idler photon by exciting a nonlinear optical crystal 204 (described below). As long as the pulsed laser light has a sufficiently small time width with respect to a desired time resolution, the pulsed laser light may have any shape. The pulsed laser light may have a Gaussian shape, a square wave shape, or any other shape. The pulsed laser light from pulsed light source 1 is referred to as "pump light". The pump light is repeatedly emitted at predetermined timing in accordance with a control command from controller 5. The pump light is desirably included in the visible range. For example, a green laser light source (a so-called green laser) having a wavelength of 532 nm may be employed as pulsed light source 1.

Pulsed light source 1 is not limited thereto. Pulsed light source 1 may be configured by causing any one of a superluminescent diode (SLD) light source, a super continuum (SC) light source, and a white laser light source (a broadband laser light source using various nonlinear materials) to operate in pulsed behavior. Pulsed light source 1 may be configured by combining a plurality of pulsed laser light sources having different center wavelengths.

Quantum interferometer 2 is configured to cause quantum interference between a plurality of physical processes in each of which a time-localized entangled photon pair is generated from the pump light. In the figure, the pump light is indicated by Lp. A signal light path (a propagation path of the signal photon) is indicated by Ls and an idler light path (a propagation path of the idler photon) is indicated by Li. Thus, the indexes p, s and i represent parameters related to the pump light, the signal light and the idler light, respectively.

In the first embodiment, quantum interferometer 2 has a configuration similar to that of a Michelson interferometer. Quantum interferometer 2 includes, for example, a mirror 201, a lens 202, a dichroic mirror 203, nonlinear optical crystal 204, a dichroic mirror 205, a fixed mirror 206, a lens 207, a sample holder 208, a moving mirror 209, a driving device 210, and a lens 211.

Mirror 201 is disposed between pulsed light source 1 and lens 202. Mirror 201 guides the pump light from pulsed light source 1 to lens 202.

Lens 202 is disposed between mirror 201 and dichroic mirror 203. Lens 202 is adjusted to collect the pump light from mirror 201 and focus the collected pump light on nonlinear optical crystal 204.

Dichroic mirror 203 is disposed between lens 202 and nonlinear optical crystal 204 and between nonlinear optical crystal 204 and lens 211. Dichroic mirror 203 allows the signal light to pass therethrough and reflects the pump light and the idler light. The pump light from lens 202 is reflected by dichroic mirror 203 and goes to nonlinear optical crystal 204.

Nonlinear optical crystal 204 is disposed between dichroic mirror 203 and dichroic mirror 205. Nonlinear optical crystal 204 generates a photon pair of the signal photon and the idler photon by spontaneous parametric down-conversion (SPDC) of the pump light. In this example, nonlinear optical crystal 204 is a lithium niobate ($MgO:LiNbO_3$) crystal that satisfies a type-I phase-matching type. In this case, the signal photon is in the visible range and the idler photon is in the infrared range (the near-infrared light range or the mid-infrared range).

The material of nonlinear optical crystal 204 is not particularly limited, and may be, for example, lithium tantalate ($LiTaO_3$), silver thiogallate ($AgGaS_2$), gallium phosphide (GaP), gallium arsenide (GaAs), zinc selenide (ZnSe), or the like. When a compound is expressed by a stoichiometric composition formula in the present specification, the stoichiometric composition formula is merely a representative example. A composition ratio may be non-stoichiometric. For example, when lithium niobate is expressed as "$LiNbO_3$", lithium niobate is not limited to the composition ratio of "Li/Nb/O = 1/1/3" and may contain Li, Nb and O at any composition ratio, unless otherwise noted. The same applies to the other compounds.

Instead of nonlinear optical crystal 204, a ring resonator or an optical waveguide may be employed. Instead of the SPDC of the pump light, spontaneous four-wave mixing (SFWM) may be used for generation of an entangled photon pair. When the ring resonator or the optical waveguide is employed, the SFWM can be suitably used. Instead of nonlinear optical crystal 204, a quasi-phase-matched (QPM) device may be employed.

Dichroic mirror 205 is disposed between nonlinear optical crystal 204 and moving mirror 209 and between nonlinear optical crystal 204 and fixed mirror 206. In this example, dichroic mirror 205 reflects visible light and allows infrared light to pass therethrough. The signal light, which is the visible light, is reflected by dichroic mirror 205 together with the pump light and goes to fixed mirror 206. On the other hand, the idler light, which is the infrared light, passes through dichroic mirror 205 and goes to moving mirror 209.

Fixed mirror 206 is, for example, a concave mirror and reflects the pump light and the signal light, each of which is reflected by dichroic mirror 205. The reflected light of the pump light and the reflected light of the signal light are reflected again by dichroic mirror 205 and return to nonlinear optical crystal 204. The signal light passes through nonlinear optical crystal 204 and further passes through dichroic mirror 203. On the other hand, the pump light passes through nonlinear optical crystal 204, but is reflected and removed by dichroic mirror 203. Therefore, the pump light never reaches photodetector 3.

Lens 207 is disposed between dichroic mirror 205 and sample holder 208. Lens 207 converts the idler light passing through dichroic mirror 205 into parallel light.

Sample holder 208 is disposed between lens 207 and moving mirror 209. Sample holder 208 holds a sample (indicated by SP in the figure). The sample contains a substance that causes a photoinduced reaction by irradiation of pulsed laser light from light stimulus device 4 (measurement light described below). A material that is transparent to the idler light (in this example, the infrared light) is used as a material of sample holder 208. The idler light is applied to the sample and the idler light passing through the sample goes to moving mirror 209.

Moving mirror 209 is, for example, a plane mirror and reflects the idler light passing through the sample. The reflected idler light passes through the sample again, and further passes through dichroic mirror 205 and returns to nonlinear optical crystal 204. A part of the idler light passes through nonlinear optical crystal 204 and dichroic mirror 203 and reaches photodetector 3. However, since photodetector 3 has sensitivity to only the visible range (described below), the idler light in the infrared range is not detected.

Driving device 210 is configured to move moving mirror 209 along a propagation direction of the idler light in accordance with a control command from controller 5. More specifically, a light path length difference between a signal light path length and an idler light path length is indicated by $\Delta L$. Driving device 210 is configured to sweep moving mirror 209, thereby changing light path length difference $\Delta L$ within a predetermined range including the position of $\Delta L = 0$ where the signal light path length and the idler light path length coincide with each other. Therefore, light path length difference $\Delta L$ is a sweeping distance of moving mirror 209. Driving device 210 is, for example, a movable stage and includes a motor driver (such as a servo motor or a stepping motor) that is mechanically displaced in accordance with a control command from controller 5. Driving device 210 may include a piezoelectric element (piezo element) that is displaced in accordance with an applied voltage from controller 5. Sweeping of light path length difference $\Delta L$ is an example of a change in "phase" according to the present disclosure. "Phase" may be changed by a phase modulator such as an electro-optic modulator (EOM).

Lens 211 is disposed between dichroic mirror 203 and photodetector 3. Lens 211 collects the signal light passing through dichroic mirror 203 and guides the collected signal light to photodetector 3.

Photodetector 3 detects the signal light from lens 211 and outputs the detection signal of the signal light to controller 5. Photodetector 3 is preferably a silicon-based photodetector and has high sensitivity to the visible range (and a part of the near-infrared range). Photodetector 3 includes, for example, a single-pixel-type light receiving element. More specifically, photodetector 3 may include a PIN photodiode, an avalanche photodiode (APD), a phototube, a photomultiplier tube (PMT), a superconducting single photon detector (SSPD), and the like. However, a configuration in which photodetector 3 includes a multi-pixel-type light receiving element (such as a complementary metal oxide semiconductor (CMOS) image sensor) is not excluded. When photodetector 3 is a device (such as a PIN photodiode, an APD or a CMOS image sensor) other than a single photon counter, photodetector 3 outputs a signal corresponding to a signal light intensity. This signal light intensity is proportional to the number of the signal photon. The detection signal output from photodetector 3 ("signal corresponding to the number of the signal photon detected by a photodetector" according to the present disclosure) includes the signal corresponding to the signal light intensity.

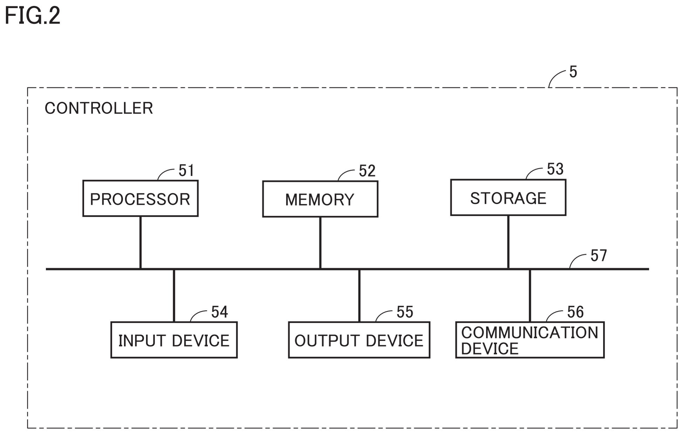

Since the principle of quantum absorption spectroscopic measurement using quantum interferometer 2 and photodetector 3 is, for example, described in detail in Fig. 2 of PTL 1, description will not be repeated.

In this example, light stimulus device 4 is configured to induce a photoreaction in the sample by applying a light stimulus to the sample. A type of the light stimulus is not limited to a light stimulus that causes a chemical reaction of the sample. The light stimulus may be, for example, a light stimulus that changes a transmittance of the sample due to a change in electric charge caused by light irradiation. Light stimulus device 4 includes, for example, a pulsed light source 41, a delay generator 42 and a mirror 43.

Pulsed light source 41 emits pulsed laser light for measurement used to induce a photoreaction in the sample. In order to avoid confusion with the pulsed laser light (pump light) from pulsed light source 1, the pulsed laser light from pulsed light source 41 is denoted as "measurement light" and is indicated by Lm in the figure. The measurement light is repeatedly emitted at the same timing as that of the pump light (i.e., synchronously with the pump light) in accordance with a control command from controller 5. Conditions (such as a wavelength (wavenumber), a peak power, an average power, a pulse width, and a repetition frequency) of the measurement light are set as appropriate depending on a type of the sample, a photoreaction of a measurement target, and the like. The pulse width of the measurement light may be any of the ms order, the $\mu$s order, the ns order, the ps order, and the fs order.

Delay generator 42 is disposed between pulsed light source 41 and mirror 43. Delay generator 42 delays the measurement light with respect to the pump light in accordance with a control command from controller 5. Delay generator 42 includes, for example, a moving mirror and a movable stage (both are not shown). When the moving mirror is displaced, a light path length of the measurement light changes, which causes a change in delay time $\delta\tau$ of the measurement light with respect to the pump light. By preparing a correspondence between the position of the moving mirror and delay time $\delta\tau$ in advance, delay time $\delta\tau$ can be set in accordance with the position of the moving mirror. Delay time $\delta\tau$ corresponds to "time gap" according to the present disclosure.

Mirror 43 is disposed between delay generator 42 and sample holder 208. Mirror 43 guides the measurement light from delay generator 42 to the sample in sample holder 208.

Controller 5 controls the devices (such as pulsed light source 1, driving device 210 and pulsed light source 41) in quantum absorption spectroscopy system 100. In addition, controller 5 performs various types of arithmetic processing for calculating an infrared absorption spectroscopy characteristic of the sample based on a quantum interference signal corresponding to the number of the signal photon detected by photodetector 3.

Fig. 2 shows a typical configuration example of controller 5. Controller 5 includes a processor 51, a memory 52, a storage 53, an input device 54, an output device 55, and a communication device 56. The components of controller 5 are communicatively connected to one another by a bus 57. Controller 5 may be divided into two or more parts for each function.

Processor 51 is an arithmetic processing unit such as a central processing unit (CPU) or a micro-processing unit (MPU). Memory 52 includes a read only memory (ROM) and a random access memory (RAM). Memory 52 stores a system program including an operating system (OS) and a control program including a computer-readable code required for control or arithmetic processing. The control program includes data (such as a map, a table or a parameter) used in the control computer program. Processor 51 implements various types of control and arithmetic processing by reading the system program and the control program, loading these programs into memory 52 and executing these programs.

Although Fig. 2 shows the example in which controller 5 includes only one processor, controller 5 may include a plurality of processors. That is, controller 5 includes one or more processors. In the present specification, "processor" is not limited to a processor in a narrow sense that performs processing in a stored program architecture, and may include a hardwired circuit such as an application specific integrated circuit (ASIC) or a field-programmable gate array (FPGA). Therefore, the term "processor" can also be read as processing circuitry, processing by which is defined in advance by a computer readable code and/or hardwired circuitry.

Storage 53 is a rewritable storage device and is a hard disk drive (HDD), a solid state drive (SSD), a flash memory, or the like. Storage 53 stores, for example, an arithmetic operation result about the infrared absorption spectroscopy characteristic by processor 51. Input device 54 accepts an input operation by a user (a measuring person such as a researcher, an engineer or an operator). Input device 54 is a keyboard, a mouse, a touch panel, or the like. Output device 55 outputs various types of information to the user. Output device 55 is a display, a printer, or the like. Communication device 56 is configured to communicate with an external device (such as a not-shown server or a not-shown terminal).

<Process Procedure>

<<First Example>>

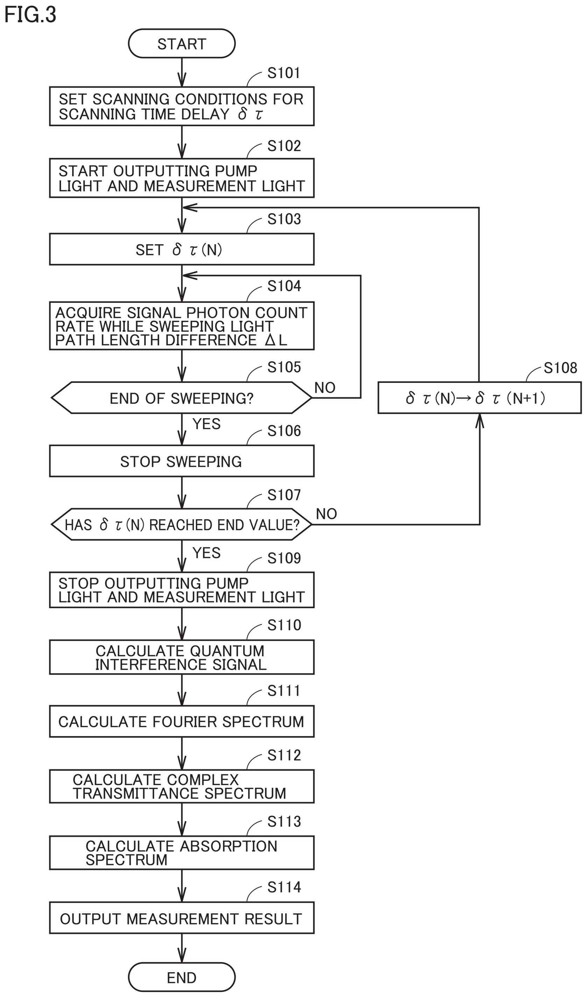

Fig. 3 is a flowchart showing a first example of a process procedure of a quantum absorption spectroscopy method in the first embodiment. This flowchart (and flowcharts in second and third examples described below) is invoked from a main routine and executed when, for example, input device 54 accepts the input operation by the user. Although each step is basically implemented by software processing by controller 5, each step may be implemented by hardware processing by electronic circuitry disposed in the controller. Hereinafter, the step will be abbreviated as "S". It is assumed that the sample is disposed in sample holder 208 on the idler light path.

In S101, controller 5 sets scanning conditions (such as a scanning step and a scanning range) for scanning delay time $\delta\tau$ between the pump light from pulsed light source 1 and the measurement light from pulsed light source 41 in accordance with the operation by the user. Although not shown, sweeping conditions (such as a sweeping step and a sweeping range) for sweeping light path length difference $\Delta L$ by moving mirror 209 are also set as appropriate depending on the requested spectral resolution.

In S102, controller 5 controls pulsed light source 1 and pulsed light source 41 to start outputting the pump light and the measurement light in synchronization with each other.

In S103, controller 5 sets a delay time $\delta\tau(N)$ (N is a natural number) to a latest value within the scanning range. An initial value of the delay time is $\delta\tau(1)$.

In S104, controller 5 controls driving device 210 provided in moving mirror 209 to start or continue sweeping light path length difference $\Delta L$ through back-and-forth movement of moving mirror 209 at high speed. Controller 5 acquires the detection signal of the signal photon from photodetector 3 while sweeping light path length difference $\Delta L$. Thus, a signal photon count rate (the number of detected signal photons per unit time) is acquired. In order to improve a signal-to-noise ratio of the spectrum, moving mirror 209 may be moved back and forth a plurality of number of times, thereby summing results of photodetection by photodetector 3. When a highspeed temporal change of the spectrum is measured, moving mirror 209 may be moved back and forth only once.

In S105, controller 5 determines whether a condition for ending sweeping of light path length difference $\Delta L$ has been satisfied. For example, when controller 5 acquires the quantum interference signal while sweeping light path length difference $\Delta L$ until the specified number of times or the specified time is reached, controller 5 may determine that the end condition has been satisfied. When the end condition has not been satisfied (NO in S105), controller 5 returns the process to S104. Thus, the processing in S104 is repeated until the end condition is satisfied. When the end condition has been satisfied (YES in S105), controller 5 controls driving device 210 of moving mirror 209 to stop sweeping light path length difference $\Delta L$ (S106). It is not essential to stop sweeping light path length difference $\Delta L$ and controller 5 may continue the process while continuing sweeping.

In S107, controller 5 determines whether delay time $\delta\tau(N)$ has reached an end value within the scanning range. When delay time $\delta\tau(N)$ has not reached the end value (NO in S107), controller 5 moves the process to S108, where controller 5 changes delay time $\delta\tau(N)$ by the scanning step and updates delay time $\delta\tau(N)$ to a next value $\delta\tau(N+1)$. Thereafter, controller 5 returns the process to S103. Thus, the processing in S104 to S106 is again performed at delay time $\delta\tau(N+1)$. When delay time $\delta\tau(N)$ has reached the end value (YES in S107), controller 5 moves the process to S109.

In S109, controller 5 controls pulsed light source 1 to stop outputting the pump light and controls pulsed light source 41 to stop outputting the measurement light.

In S110, controller 5 calculates the quantum interference signal based on the signal photon count rate during sweeping of moving mirror 209 at the same delay time $\delta\tau$. As a result, a plurality of quantum interference signals corresponding to a plurality of delay times $\delta\tau$, respectively, are acquired (refer to the equation (12) described below).

In S111, by performing Fourier transform on each of the plurality of quantum interference signals, controller 5 calculates a plurality of Fourier spectrums corresponding to delay times $\delta\tau$ different from one another. Although not shown, a Fourier spectrum by background measurement in a state where the sample is not disposed on the idler light path (hereinafter, denoted as "reference Fourier spectrum") has already been acquired in advance. When background measurement is not performed, the reference Fourier spectrum is acquired by performing a series of processing without disposing the sample.

In S112, by calculating a ratio between the Fourier spectrum in a state where the sample is disposed on the idler light path and the reference Fourier spectrum for each delay time $\delta\tau$, controller 5 calculates a complex transmittance spectrum of the sample for each delay time $\delta\tau$ (refer to the equation (17) described below).

In S113, by calculating a squared absolute value of the complex transmittance spectrum of the sample, controller 5 calculates an infrared absorption spectrum of the sample for each delay time $\delta\tau$.

In S114, controller 5 outputs the measurement result of the infrared absorption spectroscopy characteristic of the sample to output device 55 (typically, the display). Thus, the user can check the Fourier spectrum, the complex transmittance spectrum and the infrared absorption spectrum for each delay time $\delta\tau$.

The complex transmittance spectrum for each delay time $\delta\tau$ and the infrared absorption spectrum for each delay time $\delta\tau$ correspond to "time-resolved spectrum" according to the present disclosure. Calculation of "time-resolved spectrum" is an example of "analysis" of a time response (a photoinduced reaction) of the sample to the measurement light. "Time-resolved spectrum" may be one of the complex transmittance spectrum and the infrared absorption spectrum. "Time-resolved spectrums" may be displayed side by side in the same graph, or may be displayed in different graphs. Furthermore, it is not essential to determine "time-resolved spectrum" and a temporal change in transmittance/absorption at a specific angular frequency (wavenumber) may be examined.

In the description of this example, delay time $\delta\tau$ is scanned and set to a plurality of values within the scanning range. However, delay time $\delta\tau$ may stay at a predetermined fixed value. That is, only one complex transmittance spectrum and/or one infrared absorption spectrum may be calculated.

<<Second Example>>

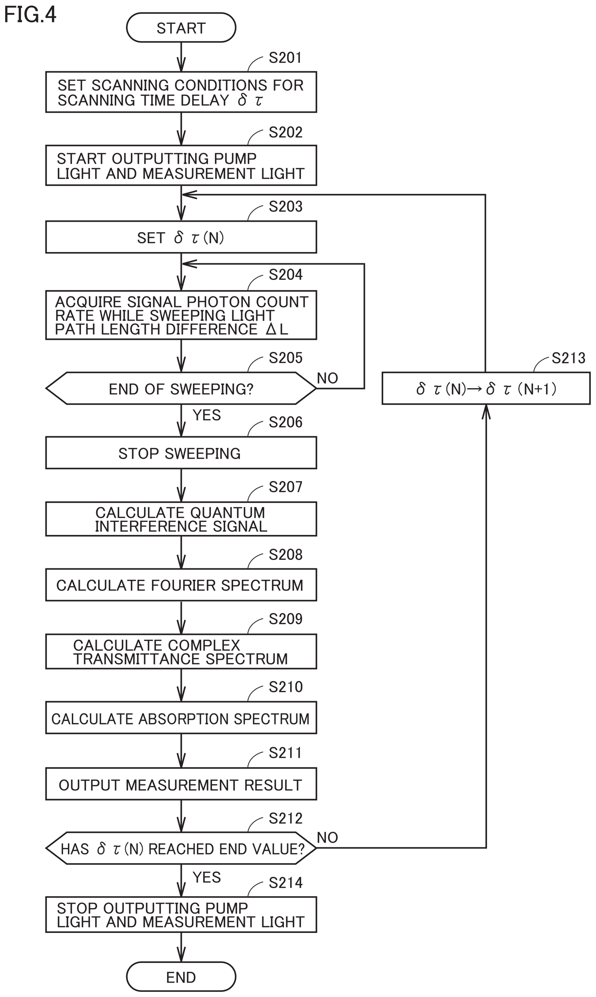

Fig. 4 is a flowchart showing a second example of the process procedure of the quantum absorption spectroscopy method in the first embodiment. In the description of the first example, after scanning of all of delay times $\delta\tau$ ends, the arithmetic processing for calculating the infrared absorption spectroscopy characteristic of the sample is performed. In the second example, arithmetic processing for calculating an infrared absorption spectroscopy characteristic for certain delay time $\delta\tau$ is performed, and then, delay time $\delta\tau$ is set to a different value. That is, scanning of delay time $\delta\tau$ and the arithmetic processing for calculating the infrared absorption spectroscopy characteristic are performed in parallel. Processing in S201 to S206 is the same as the processing in S101 to S106 in the first example.

When sweeping of light path length difference $\Delta L$ is stopped in S206, controller 5 calculates a quantum interference signal based on the signal photon count rate acquired by sweeping of moving mirror 209 at delay time $\delta\tau$ set in S203 (S207).

In S208, by performing Fourier transform on the quantum interference signal calculated in S207, controller 5 calculates a Fourier spectrum corresponding to delay time $\delta\tau$ set in S203.

In S209, by calculating a ratio between the Fourier spectrum in a state where the sample is disposed on the idler light path and the reference Fourier spectrum for delay time $\delta\tau$ set in S203, controller 5 calculates a complex transmittance spectrum.

In S210, by calculating a squared absolute value of the complex transmittance spectrum calculated in S209, controller 5 calculates an infrared absorption spectrum for delay time $\delta\tau$ set in S203.

In S211, controller 5 outputs the measurement result of the infrared absorption spectroscopy characteristic of the sample for delay time $\delta\tau$ set in S203 to output device 55.

In S212, controller 5 determines whether delay time $\delta\tau(N)$ has reached an end value within the scanning range. When delay time $\delta\tau(N)$ has not reached the end value (NO in S212), controller 5 updates delay time $\delta\tau(N)$ to a next value $\delta\tau$ (N+1) (S213) and returns the process to S203. Thus, the processing in S203 to S211 is performed for next delay time $\delta\tau$ (N+1), and as a result, the Fourier spectrum, the complex transmittance spectrum and the infrared absorption spectrum for delay time $\delta\tau(N+1)$ are acquired and output to output device 55.

When delay time $\delta\tau(N)$ has reached the end value (YES in S212), controller 5 controls pulsed light source 1 to stop outputting the pump light and controls pulsed light source 41 to stop outputting the measurement light (S214).

According to the second example, the measurement result of the infrared absorption spectroscopy characteristic for each delay time $\delta\tau(N)$ is output to output device 55 in real time. Therefore, the user can check the interim progress of the measurement result of the infrared absorption spectroscopy characteristic (in this example, a transient change in characteristic caused by the photoreaction), or check a time scale of the photoreaction of the sample, without waiting for the end of scanning for all of delay times $\delta\tau(N)$.

<<Third Example>>

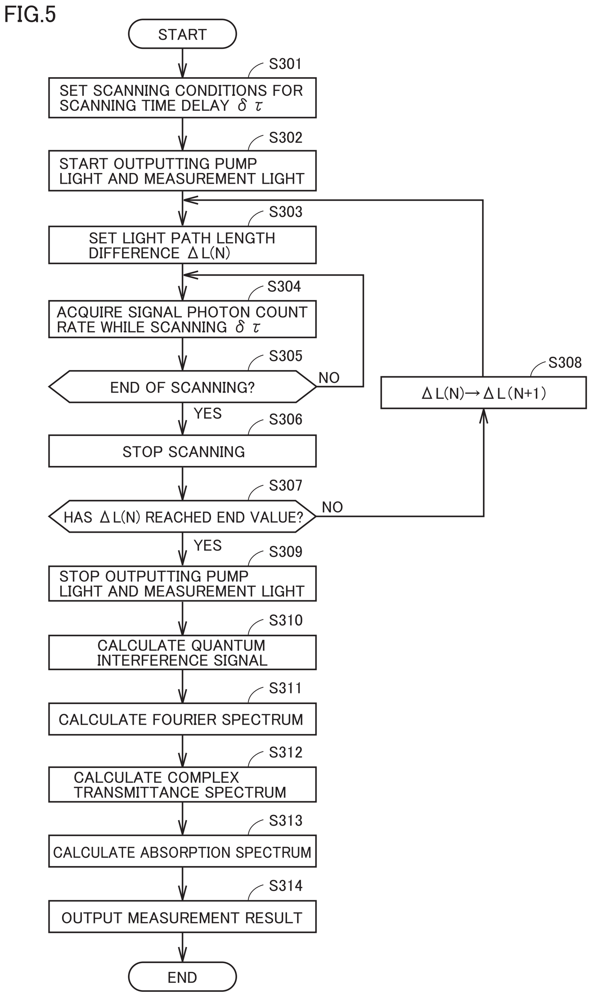

Fig. 5 is a flowchart showing a third example of the process procedure of the quantum absorption spectroscopy method in the first embodiment. In the description of the first and second examples, sweeping distance $\Delta L$ of moving mirror 209 is swept, with delay time $\delta\tau$ between the pump light and the measurement light being fixed. In contrast, in the third example, delay time $\delta\tau$ is scanned, with sweeping distance $\Delta L$ being fixed. Processing in S301 and S302 is the same as the processing in S101 and S102 in the first example.

In S303, controller 5 sets a sweeping distance $\Delta L(N)$ to a latest value within the sweeping range.

In S304, controller 5 acquires the detection signal of the signal photon (signal photon count rate) from photodetector 3 while scanning delay time $\delta\tau$ in accordance with the scanning conditions.

In S305, controller 5 determines whether an end condition about scanning of delay time $\delta\tau$ has been satisfied. When the end condition has not been satisfied (NO in S305), controller 5 returns the process to S304. Thus, the processing in S304 is repeated until the end condition is satisfied. When the end condition has been satisfied (YES in S305), controller 5 controls delay generator 42 to stop scanning delay time $\delta\tau$ (S306).

In S307, controller 5 determines whether sweeping distance $\Delta L(N)$ has reached an end value within the sweeping range. When sweeping distance $\Delta L(N)$ has not reached the end value (NO in S307), controller 5 moves the process to S308, where controller 5 changes sweeping distance $\Delta L(N)$ by the sweeping step and updates sweeping distance $\Delta L(N)$ to a next value $\Delta L(N+1)$. Thereafter, controller 5 returns the process to S303. Thus, the processing in S304 to S306 is again performed at sweeping distance $\Delta L(N+1)$. When sweeping distance $\Delta L(N+1)$ has reached the end value (YES in S307), controller 5 moves the process to S309. The processing in S309 and the subsequent steps is similar to the processing in S109 and the subsequent steps in the first example.

As described above, according to quantum absorption spectroscopy system 100, time-resolved measurement is achieved by scanning delay time $\delta\tau$ between the pump light and the measurement light and calculating the spectrums (such as the complex transmittance spectrum and the infrared absorption spectrum) at various delay times $\delta\tau$.

<Degradation of Spectral Resolution>

In the following is described a reason why it has been conventionally considered that the spectral resolution is degraded when the pulsed light source is employed as the pump light source for generating an entangled photon pair. Hereinafter, the continuous light will also be denoted as "continuous wave (CW) light". An angular frequency of the light will also be simply denoted as "frequency". An angular frequency of the pump photon will be denoted as pump frequency $\omega_p$, an angular frequency of the signal photon will be denoted as signal frequency $\omega_s$, and an angular frequency of the idler photon will be denoted as idler frequency $\omega_i$.

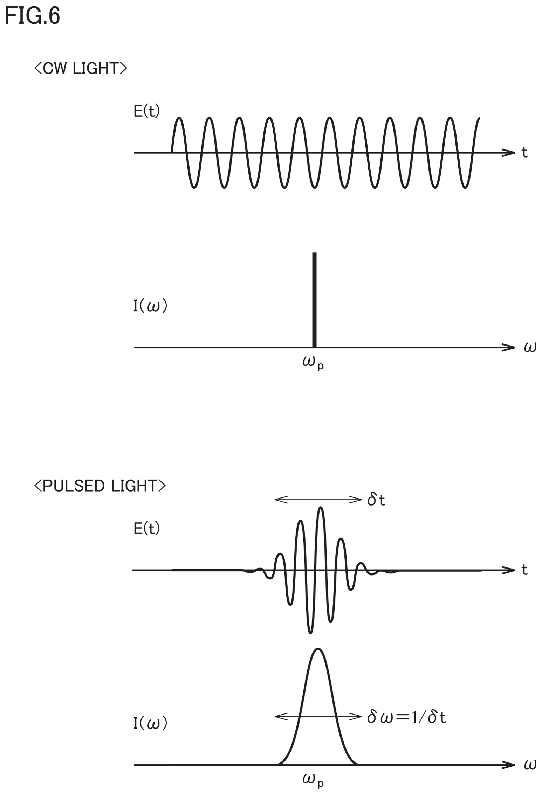

Fig. 6 shows comparison between the CW light and the pulsed light. The CW light is the light having a constant light intensity (amplitude) in a time region and having a frequency set to one value $\omega_p$. In contrast, the pulsed light is the light localized with a pulse time width $\delta t$ in a time region. A frequency of the pulsed light is distributed over an extent of $\delta\omega$ centered at $\omega_p$. Between pulse time width $\delta t$ and spectral width $\delta\omega$, there is an uncertainty relationship between the time and the energy, which is expressed as $\delta t \cdot \delta\omega \sim 1/2$.

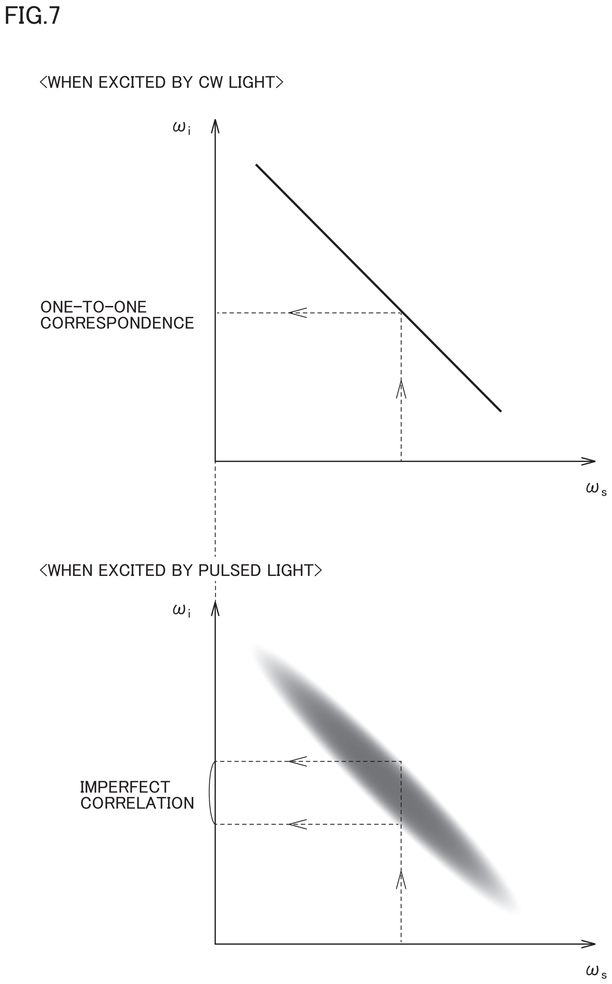

Fig. 7 is a diagram for illustrating a correlation between signal frequency $\omega_s$ and idler frequency $\omega_i$. The horizontal axis represents signal frequency $\omega_s$ and the vertical axis represents idler frequency $\omega_i$.

When an entangled photon pair is generated by the SPDC of the pump light, the energy conservation law of $\omega_p = \omega_s + \omega_i$ is satisfied. When the nonlinear optical crystal is excited by the CW light (CW excitation), the energy conservation law is indicated by a straight line as shown in the upper figure. Under this linear correlation, signal frequency $\omega_s$ and idler frequency $\omega_i$ have a one-to-one correspondence. That is, as shown by an arrow in the figure, when one of signal frequency $\omega_s$ and idler frequency $\omega_i$ is set, the other is also set uniquely.

In contrast, in the lower figure when the nonlinear optical crystal is excited by the pulsed light (pulse excitation), an extent of spectral width $\delta\omega_p$ of an excitation frequency is expressed by the shades of color. This extent is caused by the above-described uncertainty and makes the correlation between signal frequency $\omega_s$ and idler frequency $\omega_i$ imperfect. Under the imperfect correlation, even when one of signal frequency $\omega_s$ and idler frequency $\omega_i$ is set, the other is only set to be within a certain range and uncertainty remains. It has been considered that when the pulsed light source is used, such a fundamental constraint leads to degradation of the spectral resolution (in this example, the frequency resolution) and time-resolved measurement with high accuracy is difficult.

For example, NPL 1 describes that "In addition, reaching the high-gain regime often requires short-pump lasers, which limits the frequency-anti-correlation of the signal and idler light for applications where spectral information is of interest", and thus, the spectral resolution is degraded (refer to lines 21 to 23 in the left column on page 2 of NPL 1). Since there is such technical common knowledge, there has been no examples of time-resolved measurement using a combination of quantum absorption spectroscopy and the pulsed light source in the past.

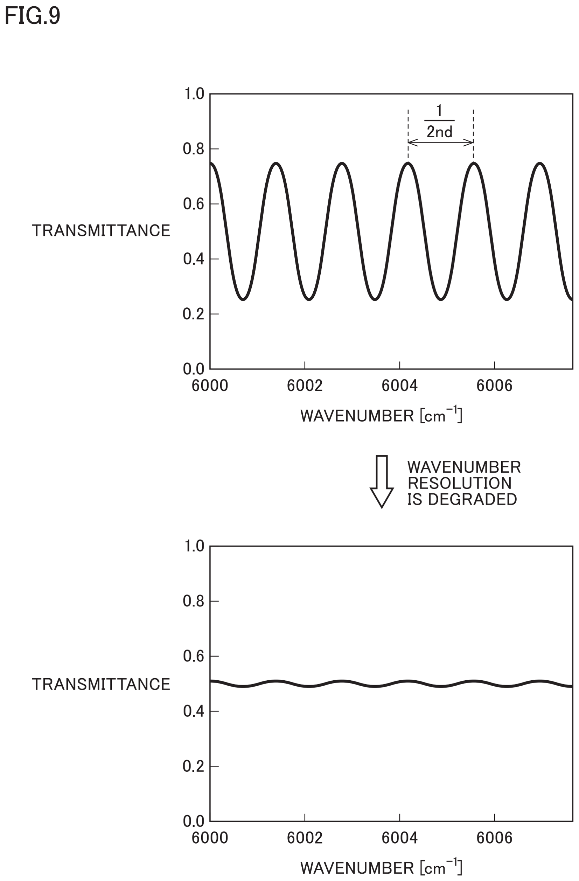

For example, Fig. 9 of PTL 2 shows a pulsed light source as a pump light source of a quantum absorption spectroscopy system. However, this is for generating an entangled photon pair at a high rate by using a high-gain region (refer to paragraphs

**[0083]** to [0109] of PTL 2). In the invention disclosed in PTL 2, time-resolved measurement is not performed, and thus, degradation of the spectral resolution is not taken into consideration in PTL 2.

"When a pulsed light source is employed as a pump light source, the spectral resolution is degraded, and thus, time-resolved analysis with high accuracy is difficult" has been the conventional technical common knowledge in the art. In order to deal with this, the present inventors have made earnest studies, and as a result, have certified from both a theoretical perspective and an actual measurement perspective that the spectral resolution is not degraded even when a pulsed light source is employed as a pump light source for generating an entangled photon pair, and completed the present invention.

<Theory>

First, the certification from the theoretical perspective that pulse excitation does not cause degradation of the spectral resolution will be described.

Hereinafter, "1" and "2" given as the subscripts represent photon modes in the first and second SPDC processes, respectively. A signal photon in a mode 1 refers to a signal photon generated by the first SPDC process and a signal photon in a mode 2 refers to a signal photon generated by the second SPDC process. The same applies to an idler photon. A superscript (dagger symbol) indicating Hermitian conjugate is written in the equations, whereas it is not written in the text.

<<Two-Photon Field Amplitude>>

A state vector |ψ> that has undergone generation of an entangled photon pair by the SPDC twice is given by the following equation (1).

[Math. 1]

$$|\Psi\rangle = |\psi\rangle_1 + |\psi\rangle_2 = |vac\rangle + \alpha \iint d\omega_s d\omega_i \, F(\omega_s, \omega_i) a_{s1}^\dagger(\omega_s) a_{i1}^\dagger(\omega_i)|vac\rangle$$

$$+ \alpha \iint d\omega_s d\omega_i \, e^{i\phi_p} F(\omega_s, \omega_i) a_{s2}^\dagger(\omega_s) a_{i2}^\dagger(\omega_i)|vac\rangle \cdots (1)$$

In the equation (1), α is a parameter related to the generation efficiency of the entangled photon pair in the SPDC and $|\alpha|^2$ = generation efficiency. $a_{s1}$ is a generation operator of the signal photon in mode 1. $a_{s2}$ is a generation operator of the signal photon in mode 2. $a_{i1}$ is a generation operator of the idler photon in mode 1. $a_{i2}$ is a generation operator of the idler photon in mode 2. $\phi_p$ is an amount of phase delay obtained by the pump light when the pump light propagates in the quantum interferometer.

$F(\omega_s, \omega_i)$ is a normalized two-photon field amplitude indicating a state of the entangled photon pair generated in the quantum interferometer ($\iint F(\omega_s, \omega_i)d\omega_s d\omega_i = 1$). More specifically, two-photon field amplitude $F(\omega_s, \omega_i)$ is indicated by a product of a phase matching condition $D(\omega_s, \omega_i)$ and a pump light spectrum $\mu(\omega_p)$ as shown in the following equation (2). C is a normalization factor.

[Math. 2]

$$F(\omega_s, \omega_i) = CD(\omega_s, \omega_i)\mu(\omega_p) \cdots (2)$$

<<Phase Matching Condition>>

Phase matching condition $D(\omega_s, \omega_i)$ indicates the efficiency at which the photon pair of the signal photon having frequency $\omega_s$ and the idler photon having frequency $\omega_i$ is generated by the SPDC process when the pump light having frequency $\omega_p$ enters nonlinear optical crystal 204. Assuming that the signal light and the idler photon are generated in the same direction (coaxial generation), phase matching condition $D(\omega_s, \omega_i)$ is represented as in the following equation (3). L is a length of nonlinear optical crystal 204 in an optical axis direction.

[Math. 3]

$$D(\omega_s, \omega_i) = \exp(i\Delta k(\omega_s, \omega_i)L) \, \text{sinc}\left(\frac{\Delta k(\omega_s, \omega_i)L}{2}\right) \cdots (3)$$

In the equation (3), $\Delta k(\omega_s, \omega_i)$ is an amount of phase mismatching determined by frequencies $\omega_s$ and $\omega_i$ of the entangled photon pair and is represented as in the following equation (4). n is a refractive index of nonlinear optical crystal 204. c is a light speed.
[Math. 4]

$$\Delta k(\omega_s, \omega_i) = \left(\frac{n_p \omega_p}{c} - \frac{n_s \omega_s}{c} - \frac{n_i \omega_i}{c}\right) = \left(\frac{n_p(\omega_s + \omega_i)}{c} - \frac{n_s \omega_s}{c} - \frac{n_i \omega_i}{c}\right) \cdots (4)$$

<<Pump Light Spectrum>>

Pump light spectrum $\mu(\omega_p)$ indicates the frequency dependence of the pump light intensity from pulsed light source 1. In accordance with the energy conservation law ($\omega_p = \omega_s + \omega_i$) in the SPDC process, the variable of spectral function $\mu$ can be replaced from $\omega_p$ to $(\omega_s + \omega_i)$. When a light source that emits CW light having a center frequency $\omega_p{}^0$ and having a sufficiently small spectral width is employed as the pump light source, a pump light spectrum $\mu(\omega_s + \omega_i)$ is approximated by a delta function as in the following equation (5).
[Math. 5]

$$\mu(\omega_s + \omega_i) = \delta\left(\omega_s + \omega_i - \omega_p^0\right) \cdots (5)$$

In contrast, when a light source that emits pulsed light having a short time width is employed as the pump light source, pump light spectrum $\mu(\omega_s + \omega_i)$ is a function having a finite extent. As a specific example, assuming that the spectral shape of the excitation pulse is a Gaussian distribution (center frequency $\omega_p{}^0$, spectral width $\sigma_p$), pump light spectrum $\mu(\omega_s + \omega_i)$ is represented as in the following equation (6).
[Math. 6]

$$\mu(\omega_s + \omega_i) = \exp\left(\frac{\left(\omega_s + \omega_i - \omega_p^0\right)^2}{2\sigma_p^2}\right) \cdots (6)$$

<<Quantum Interference Signal>>

Quantum interferometer 2 is adjusted such that a forward path and a backward path of the signal light coincide with each other (the signal photon in mode 1 and the signal photon in mode 2 propagate along the same path in the nonlinear optical crystal). The same applies to the idler light path. In this case, a relationship between the signal photon in mode 1 and the signal photon in mode 2 is represented as in the following equation (7). $t_s$ is a propagation time on the signal light path. The equation (7) indicates a change in phase of the signal photon in mode 1 that occurs when the signal photon in mode 1 propagates in the quantum interferometer.
[Math. 7]

$$a_{s2}^{\dagger} = e^{-i\omega_s t_s} a_{s1}^{\dagger} \cdots (7)$$

On the other hand, a relationship between the idler photon in mode 1 and the idler photon in mode 2 is represented as in the following equation (8). $t_i$ is a propagation time on the idler light path.
[Math. 8]

$$a_{i2}^{\dagger} = e^{-i\omega_i t_i}\left[(\tau^*(\omega_i))^2 a_{i1}^{\dagger} + \tau^*(\omega_i)r^*(\omega_i)a_{v1}^{\dagger} + r^*(\omega_i)a_{v2}^{\dagger}\right] \cdots (8)$$

The equation (8) indicates a change in phase of the idler photon in mode 1 that occurs when the idler photon in mode 1 propagates in the quantum interferometer, and indicates an optical loss of the idler photons in mode 1 and mode 2 caused by the sample disposed on the idler light path (sample holder 208). The optical loss is expressed in accordance with a beam splitter model using a complex transmittance $\tau(\omega_i)$ and a complex reflectance $r(\omega_i)$ of the sample, and $r(\omega_i) = \sqrt{(1-(\tau(\omega_i))^2)}$. Each of $a_{v1}$ and $a_{v2}$ is a vacuum field incident from a port different from that of the idler photon in the beam splitter model.

In quantum absorption spectroscopy system 100, the signal photons of all of the frequencies are detected by photodetector 3 disposed in the subsequent stage of quantum interferometer 2. In this case, a signal electric field (an electric field generated by the signal photons) $E_s^{(+)}$ in photodetector 3 is represented as in the following equation (9). Using the equation (7) and the equation (8), the equation (10) is derived from the equation (9).

[Math. 9]

$$E_s^{(+)}(t) \propto \int a_{s2}(\omega)\, e^{-i\omega t}\, d\omega \cdots (9)$$

$$E_s^{(+)}(t)|\Psi\rangle \propto \iint d\omega_s d\omega_i e^{-i\omega_s t} F(\omega_s, \omega_i) \left[ \left(1 + e^{i\varphi_p - i\omega_s t_s - i\omega_i t_i} \tau^{*2}(\omega_i)\right) a_{i1}^\dagger(\omega_i) \right.$$
$$\left. + e^{i\varphi_p - i\omega_s t_s - i\omega_i t_i} \left( r^*(\omega_i)\tau^*(\omega_i) a_{v1}^\dagger(\omega_i) + r^* a_{v2}^\dagger(\omega_i) \right) \right] |vac\rangle \cdots (10)$$

The quantum interference signal (signal photon count rate) is described as in the following equation (11). By substituting the equation (7) and the equation (8) into the equation (11), the equation (12) is derived. A relationship of $\phi_p = \omega_p t_s = \omega_s t_s + \omega_i t_s$ is also used.

[Math. 10]

$$P_s = \left\langle \Psi \left| E_s^{(-)} E_s^{(+)} \right| \Psi \right\rangle \cdots (11)$$
$$P_s \propto \iint d\omega_s d\omega_i |F(\omega_s, \omega_i)|^2 \left(2 + \left[\left(\tau^*(\omega_i)\right)^2 e^{-i\omega_i(t_s - t_i)} + \left(\tau(\omega_i)\right)^2 e^{i\omega_i(t_s - t_i)}\right]\right) \cdots (12)$$

When the equation (12) is rewritten from the $(\omega, t)$ representation to the $(k, \Delta L)$ representation using a relational equation between frequency $\omega$ and wavenumber k of the photon ($\omega = ck$) and a relational equation between propagation time t and propagation distance L of the photon (t = L/c), the following equation (13) is obtained.

[Math. 11]

$$P_s \propto \iint dk_s dk_i |F(k_s, k_i)|^2 \left\{2 + \left[\left(\tau^*(k_i)\right)^2 e^{-ik_i\Delta L} + \left(\tau(k_i)\right)^2 e^{ik_i\Delta L}\right]\right\} \cdots (13)$$

The equation (13) is a general equation of the quantum interference signal indicating how the number of the detected signal photons varies depending on sweeping distance $\Delta L$ on the idler light path. As described above, a two-photon field amplitude $F(k_s, k_i)$ is dependent on a pump light spectrum $\mu(k_s + k_i)$ (refer to the equation (2)), and thus, the quantum interference signal is also dependent on pump light spectrum $\mu(k_s + k_i)$.

<<Fourier Spectrum>>

As described in S111 in Fig. 3, S208 in Fig. 4 and S311 in Fig. 5, by performing Fourier transform on a quantum interference signal $P_s(\Delta L)$ about sweeping distance $\Delta L$, a Fourier spectrum $A_s(k)$ about wavenumber k is calculated. Fourier spectrum $A_s(k)$ is defined by the following equation (14).

[Math. 12]

$$A_s(k) = \frac{1}{2\pi} \int d\Delta L P_s(\Delta L)\, e^{ik\Delta L} \cdots (14)$$

By substituting the equation (13) into the equation (14) and performing an integral operation, with wavenumber being k > 0, Fourier spectrum $A_s(k)$ under the condition that the sample is disposed on the idler light path is derived as in the following equation (15).

[Math. 13]

$$A_S(k) \propto \iiint d\Delta L dk_s\, dk_i e^{ik\Delta L} |F(k_s, k_i)|^2 \left( (\tau^*(k_i))^2 e^{-ik_i\Delta L} + \left(\tau(k_i)\right)^2 e^{ik_i\Delta L} \right)$$

$$= \iint dk_s dk_i\, |F(k_s, k_i)|^2 \left( (\tau^*(k_i))^2 \delta(k - k_i) + (\tau(k_i))^2 \delta(k + k_i) \right)$$

$$= \int dk_s\, |F(k_s, k)|^2 \left(\tau^*(k)\right)^2 \qquad \cdots (15)$$

On the other hand, a reference Fourier spectrum $A_s^0(k)$ under the condition that the sample is not disposed on the idler light path is represented as in the following equation (16).

[Math. 14]

$$A_S^0(k) \propto \int dk_s\, |F(k_s, k)|^2 \cdots (16)$$

<<Complex Transmittance Spectrum>>

As shown in the upper part of the right side of the following equation (17), a measurement value $\tau_{measure}$ of the complex transmittance spectrum of the sample is calculated in accordance with a ratio of Fourier spectrum $A_s(k)$ when the sample is disposed on the idler light path to reference Fourier spectrum $A_s^0(k)$.

[Math. 15]

$$\left|\tau_{measure}(k)\right|^2 = |A_s(k)/A_s^0(k)|$$

$$= \left| \frac{\int dk_s |F(k_s, k)|^2 (\tau^*(k))^2}{\int dk_s\, |F(k_s, k)|^2} \right|$$

$$= |\tau(k)|^2 \qquad \cdots (17)$$

When the equation (15) and the equation (16) are substituted into the equation (17) and arranged (refer to the middle part of the right side of the equation (17)), a true value $(\tau(k))^2$ of the complex transmittance spectrum of the numerator is taken out from an integral of a signal wavenumber $k_s$ and an integral portion including two-photon field amplitude $F(k_s, k_i)$ is canceled between the numerator and the denominator. As a result, as shown in the lower part of the right side of the equation (17), it is derived that a measurement value $\tau_{measure}(k)$ of the complex transmittance spectrum is equal to a true value $\tau(k)$ of the complex transmittance spectrum.

The equation (17) means that measurement value $\tau_{measure}(k)$ of the complex transmittance spectrum is not dependent on a specific function form of two-photon field amplitude $F(k_s, k_i)$, in other words, complex transmittance spectrum $\tau_{measure}(k)$ is not dependent on the shape of pump light spectrum $\mu$ and is not affected by the spectral width of the excitation pulse. This is caused by the fact that the correlation between signal frequency $\omega_s$ and idler frequency $\omega_i$ described with reference to Fig. 6 is not used in Fourier analysis. As described above, according to the present embodiment, since the spectral resolution is not degraded although the pulsed light source is employed as the pump light source for generating an entangled photon pair, the time response of the sample to the external stimulus can be measured with high accuracy.

<<Spectrometer>>

In the present embodiment, the signal photons of all of the wavenumbers (frequencies) are detected by photodetector 3 (refer to Fig. 1 and the above-described equation (12)). In contrast, a system configuration in which a spectrometer is disposed in the preceding stage of the photodetector and only a signal photon of a specific wavenumber separated by the spectrometer is detected by the photodetector is also conceivable. However, according to the studies by the present inventors, a complex transmittance spectrum calculated from the result of detection of the signal photon of the partial wavenumber is dependent on the pump light spectrum. As a result, the spectral resolution is degraded, and thus, time-resolved measurement with high accuracy is difficult. These findings will be described below for comparison.

A quantum interference signal $P_s'(k_s')$ at a specific wavenumber $k_s'$ is represented as in the following equation (18).

[Math. 16]

$$P'_s(k'_s) \propto \int dk_i |F(k'_s, k_i)|^2 \left\{ 2 + \left[ \left( \tau^*(k_i) \right)^2 e^{-ik_i \Delta L} + \left( \tau(k_i) \right)^2 e^{ik_i \Delta L} \right] \right\} \cdots (18)$$

In the system configuration in which the spectrometer is disposed, Fourier transform of the quantum interference signal is not performed. Instead of this, a visibility $V(k_s')$ of quantum interference is calculated based on a maximum value $P_s'^{max}$ and a minimum value $P_s'^{min}$ of quantum interference signal $P_s'(k_s')$, as in the following equation (19).

[Math. 17]

$$V(k'_s) = \frac{P_s'^{max} - P_s'^{min}}{P_s'^{max} + P_s'^{min}} \cdots (19)$$

Regarding an idler wavenumber $k_i'$ ($= k_p^0 - k_s'$), a complex transmittance spectrum $\tau(k_i')$ is calculated based on a ratio of a visibility $V(k_i')$ under the condition that the sample is disposed on the idler light path to a visibility $V_{ref}(k_i')$ under the condition that the sample is not disposed on the idler light path (refer to the following equation (20)). $k_p^0$ ($= \omega_p^0/c$) is a center wavenumber of the pump light.

[Math. 18]

$$\tau(k'_i) = \frac{V(k'_i)}{V_{ref}(k'_i)} \cdots (20)$$

When the CW light is used as the pump light, a pump light spectrum $\mu(k_s' + k_i)$ is approximated by a delta function $\delta(k_s' - k_i)$ (refer to the equation (5)). Therefore, the above-described equation (18) is modified as in the following equation (21). It is understood from the equation (19) and the equation (21) that complex transmittance spectrum $\tau(k_i')$ is reflected in the quantum interference signal and thereby is also reflected in visibility V.

[Math. 19]

$$P'_s(k'_s) \propto |\psi(k'_s, k'_i)|^2 \left\{ 2 + \left[ \left( \tau^*(k'_i) \right)^2 e^{-ik'_i \Delta L} + \left( \tau(k'_i) \right)^2 e^{ik'_i \Delta L} \right] \right\} \cdots (21)$$

In contrast, when the pulsed light having a finite spectral line width is used as the pump light, complex transmittance spectrum $\tau(k_i')$ is reflected in visibility V of quantum interference and information caused by the imperfect correlation between signal frequency $\omega_s$ and idler frequency $\omega_i$ is superimposed on the quantum interference signal.

A specific example will be described. A Gaussian distribution similar to that in the above-described equation (6) is assumed as an excitation spectrum and it is assumed that an amount of phase mismatching $\Delta k$ is constant in a target wavenumber range (phase matching condition $D(k_s, k_i)$ = const.). By changing the specific representation of two-photon field amplitude $F(\omega_s, \omega_i)$ at the time of excitation by the pulsed light into the wavenumber representation and substituting it into the above-described equation (18), the following equation (22) is derived.

[Math. 20]

$$P'_s(k'_s) \propto \int dk_i \, exp\left( \frac{(ck'_s - ck_{p+}^0 ck_i)^2}{\sigma_p^2} \right) \left[ \left( \tau^*(k_i) \right)^2 e^{-ik_i \Delta L} + \left( \tau(k_i) \right)^2 e^{ik_i \Delta L} \right]$$

$$= \int dk_i \, exp\left( \frac{(ck_i - ck'_i)^2}{\sigma_p^2} \right) \left[ \left( \tau^*(k_i) \right)^2 e^{-ik_i \Delta L} + \left( \tau(k_i) \right)^2 e^{ik_i \Delta L} \right] \cdots (22)$$

In comparison between the equation (22) and the equation (21), the equation (22) is the same as the equation (21) in that complex transmittance spectrum $\tau(k_i')$ is reflected in the quantum interference signal. However, the equation (22) is different from the equation (21) in that the quantum interference signal includes an exponential function including spectral

width $\sigma_p$ of the pump light as a variable. This difference indicates that when the pulsed light is used as the pump light, the quantum interference signal is dependent on spectral width $\sigma_p$ of the pump light, which affects visibility V, and as a result, the spectral resolution is degraded.

<Experiment>

Next, the certification from the experimental perspective that the pulse excitation does not cause degradation of the spectral resolution will be described.

<<Comparison between CW Excitation and Pulse Excitation>>

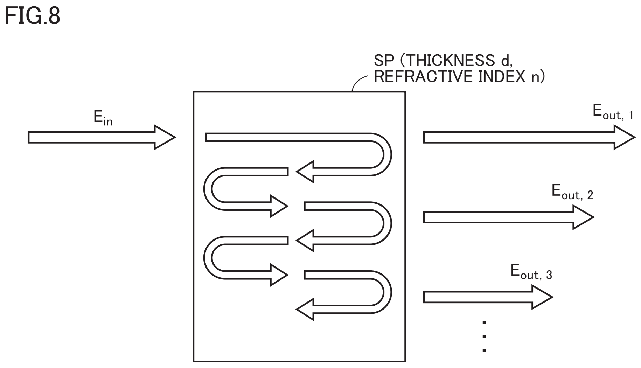

Fig. 8 is a conceptual diagram for illustrating an experiment method about the spectral resolution (wavenumber resolution). In this example, a silicon wafer (thickness d = 1 mm, refractive index n = 3.6) was used as a sample. When the idler light (in this example, the infrared light) enters the silicon wafer, surface reflection occurs many times in the silicon wafer. Then, due to interference of an optical electric field, an interference structure (a vibration pattern with respect to a wavenumber) having a wavenumber cycle of $\delta k = 1/(2nd)$ occurs in a transmittance spectrum.

Fig. 9 shows an example of the interference structure based on simulation. When a wavenumber resolution is sufficiently high, an interference structure in which a plurality of peaks are separated from one another is observed as shown in the upper figure. In contrast, when the wavenumber resolution is degraded, only an unclear interference structure is observed as shown in the lower figure.

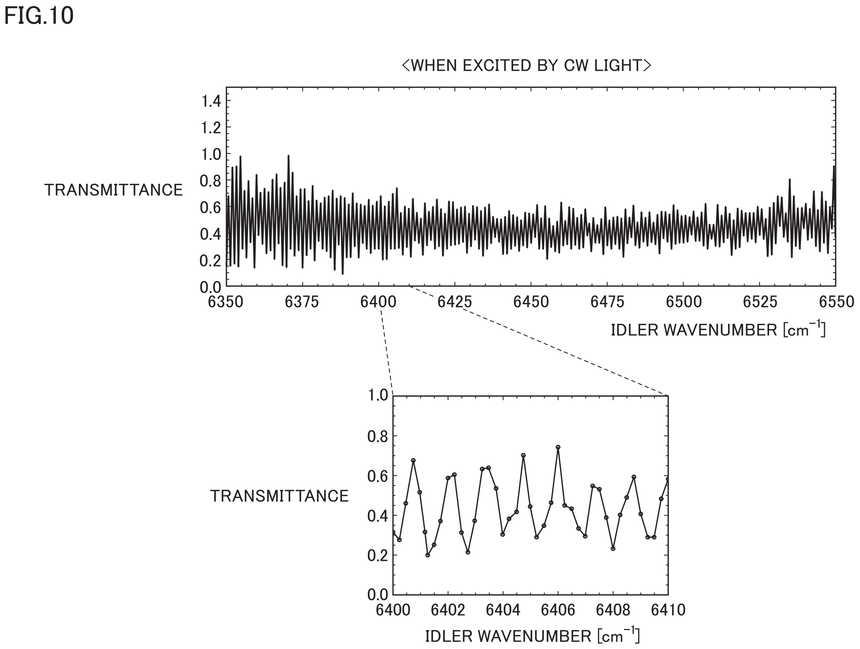

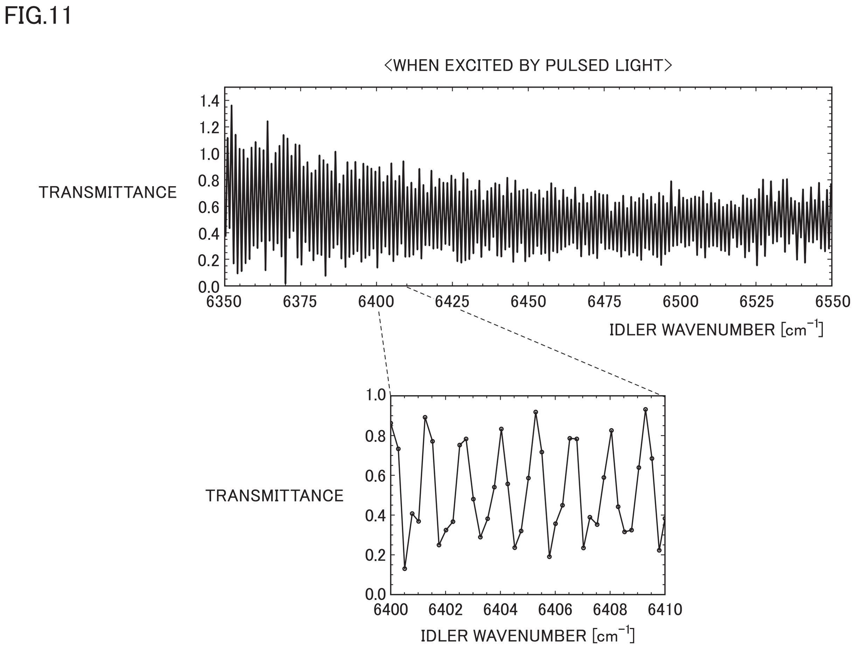

Fig. 10 shows an example of a result of evaluation of the spectral resolution in CW excitation based on actual measurement. Fig. 11 shows an example of a result of evaluation of the spectral resolution in pulse excitation based on actual measurement. The measurement light had a pulse width of about 5 ps. An estimated value of the wavenumber resolution determined from sweeping distance $\Delta L$ of moving mirror 209 was 0.25 cm$^{-1}$. As shown in Fig. 11, even in the case of pulse excitation, a clear interference structure similar to that in the case of CW excitation shown in Fig. 10 was observed. These results of evaluation clearly show that pulse excitation does not cause degradation of the spectrum resolution.

<<Spectrometer>>

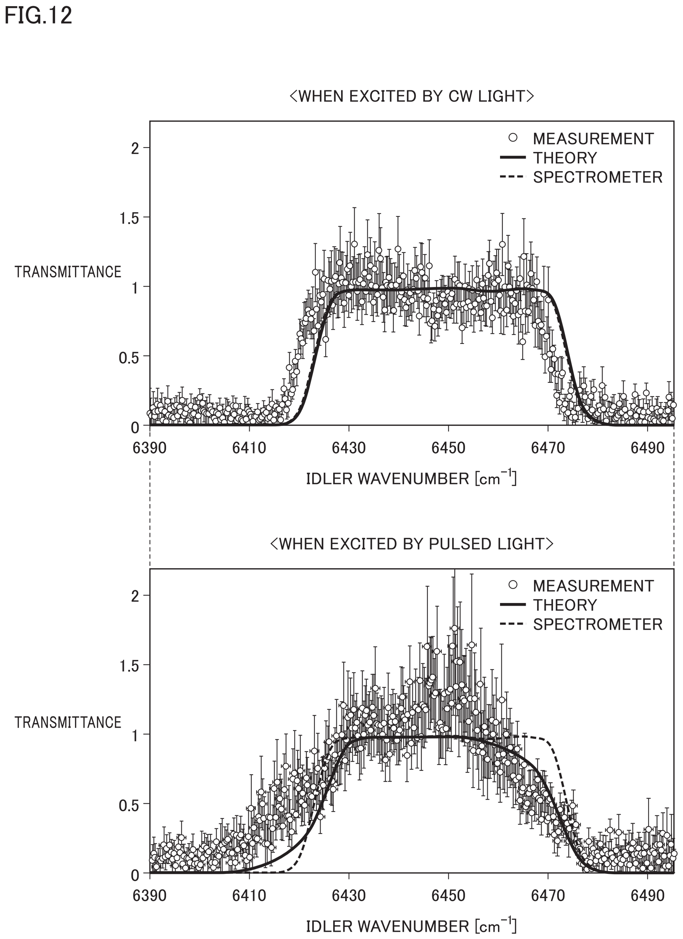

Fig. 12 shows an example of a measurement result indicating degradation of the spectral resolution (wavelength resolution) when the spectrometer is used. A bandpass filter having a center wavelength of 1550 nm and a full width at half maximum (FWHM) in a transmission wavenumber range of 12 nm was used as a sample.

In the case of CW excitation, measurement with a high wavenumber resolution of 0.4 cm$^{-1}$ was possible (however, this wavenumber resolution is determined depending on the wavenumber resolution of the spectrometer). In contrast, in the case of pulse excitation, the wavenumber resolution was degraded to 8 cm$^{-1}$. This value was good coincident with theoretical calculation.

As described above, in the first embodiment, the pulsed light source is employed as the pump light source for generating an entangled photon pair and quantum interferometer 2 and light stimulus device 4 for inducing a photoreaction of the sample are combined. This combination is based on the present inventors' new findings that pulse excitation does not cause degradation of the spectral resolution (refer to, particularly, the equation (17)), which is beyond the conventional technical common knowledge. According to the first embodiment, the time response of the sample to the light stimulus can be measured with high accuracy in time-resolved quantum absorption spectroscopy.

NPL 2 discloses classical time-resolved infrared spectroscopy. In NPL 2, an infrared pulse is generated by a nonlinear optical effect using an ultra-short visible pulse and the infrared light is detected. In order to generate an ultra-short infrared pulse, an optical parametric amplifier (OPA) system using a high-intensity ultra-short visible pulse (or a long and short near-infrared pulse) is needed as a wavelength conversion mechanism (refer to lines 31 to 38 in the left column on page 2 of NPL 2). Such a combination of an ultra-short visible pulsed light source and the OPA system is very expensive and large in size. In contrast, in quantum absorption spectroscopy, a light source having low pulse energy can be used and the OPA system is also unnecessary. Therefore, according to the first embodiment, the system can be reduced in cost and size, as compared with the classical time-resolved spectroscopy system.

[Modification of First Embodiment]

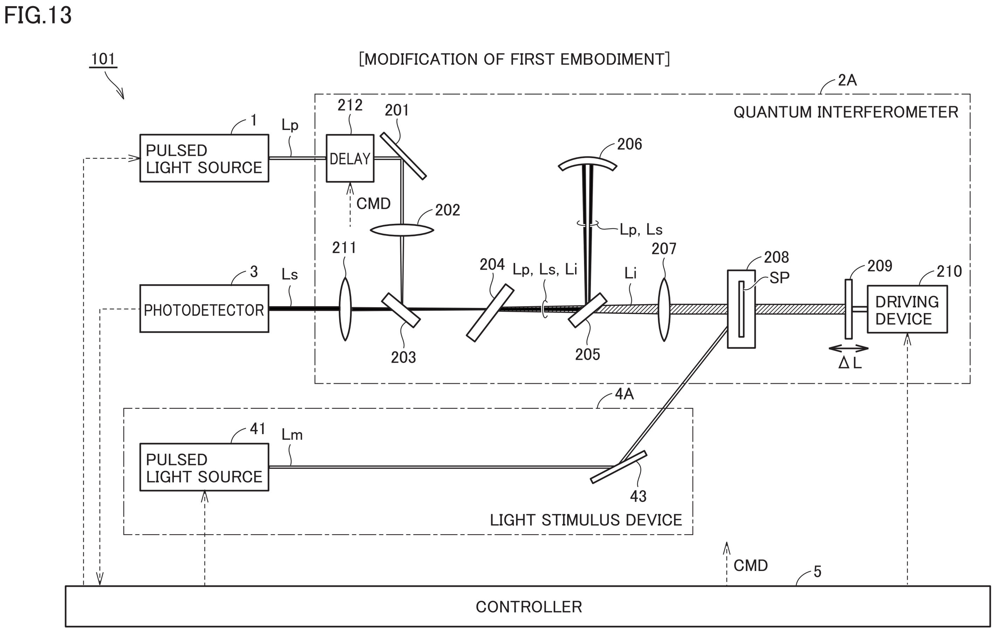

Fig. 13 shows an example of an overall configuration of a quantum absorption spectroscopy system according to a modification of the first embodiment. A quantum absorption spectroscopy system 101 is different from quantum absorption spectroscopy system 100 according to the first embodiment (see Fig. 1) in that quantum absorption spectroscopy system 101 includes a quantum interferometer 2A instead of quantum interferometer 2, and in that quantum absorption spectroscopy system 101 includes a light stimulus device 4A instead of light stimulus device 4.

Light stimulus device 4A does not include delay generator 42, while quantum interferometer 2A includes a delay generator 212. In other words, quantum absorption spectroscopy system 101 is different from quantum absorption spectroscopy system 100 in that delay generator 42 is relocated from the measurement light path to the pump light path. Delay generator 212 may be disposed between mirror 201 and lens 202. Since the remaining configuration of quantum absorption spectroscopy system 101 is similar to the corresponding configuration in quantum absorption spectroscopy system 100, description will not be repeated.

As described above, as long as a relative time gap between the pump light and the measurement light can be adjusted (delay time $\delta\tau$ can be set), placement of the delay generator is not particularly limited.

[Second Embodiment]

In the first embodiment, the configuration in which the two pulsed light source (pulsed light source 1 and pulsed light source 41) are employed has been described. In a second embodiment, a configuration in which a single pulsed light source functions as the above-described two pulsed light sources will be described.

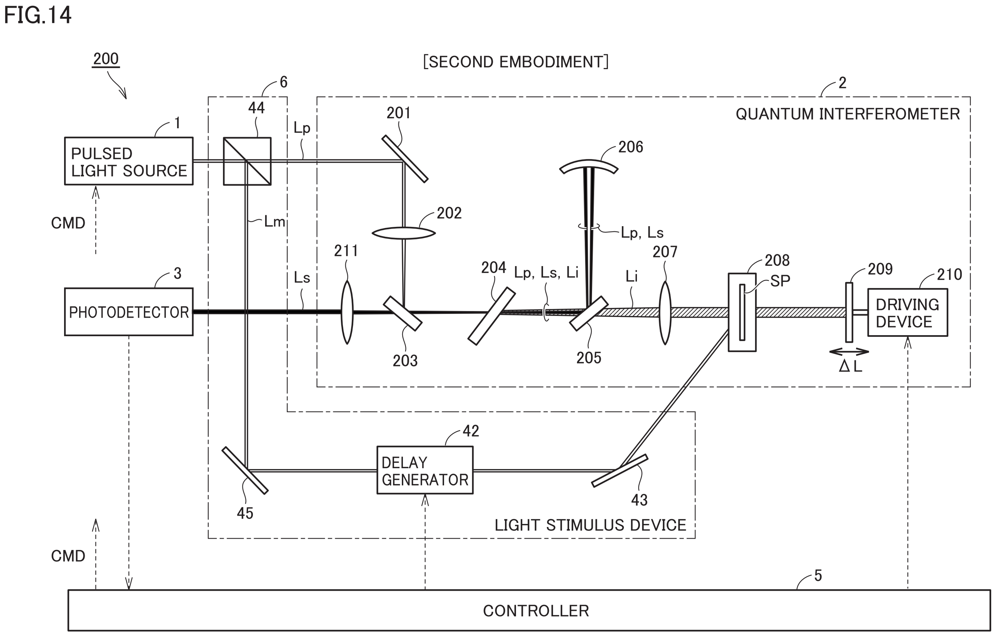

Fig. 14 shows an example of an overall configuration of a quantum absorption spectroscopy system according to the second embodiment. A quantum absorption spectroscopy system 200 is different from quantum absorption spectroscopy system 100 according to the first embodiment (see Fig. 1) in that quantum absorption spectroscopy system 200 includes a light stimulus device 6 instead of light stimulus device 4. Light stimulus device 6 is different from light stimulus device 4 in that light stimulus device 6 does not include pulsed light source 41 and includes a beam splitter 44 and a mirror 45.

Beam splitter 44 is disposed between pulsed light source 1 and mirror 201 and between pulsed light source 1 and mirror 45. Beam splitter 44 allows a part of the pulsed laser light from pulsed light source 1 to pass therethrough and reflects the remaining part. The pulsed laser light passing through beam splitter 44 goes to mirror 201 as the pump light (indicated by Lp). On the other hand, the pulsed laser light reflected by beam splitter 44 goes through mirror 45 to delay generator 42 as the measurement light (indicated by Lm). Beam splitter 44 is an example of "optical element" according to the present disclosure. "Optical element" may be another element (such as a half mirror or a prism).

Since the remaining configuration of quantum absorption spectroscopy system 200 is the same as the corresponding configuration in quantum absorption spectroscopy system 100, description will not be repeated. Although not shown, similarly to the modification (see Fig. 13) of the first embodiment, the delay generator may be disposed on the pump light path in the second embodiment.

Similarly to the first embodiment, the second embodiment can also achieve time-resolved spectroscopy with high accuracy. In addition, in the second embodiment, pulsed light source 41 that is expensive and takes up space is replaced with inexpensive and compact beam splitter 44, as compared with the first embodiment. Therefore, according to the second embodiment, the quantum absorption spectroscopy system can be reduced in component cost and size.

[Third Embodiment]

In the first embodiment, the configuration in which time-resolved spectroscopy of the photoinduced reaction is performed has been described. However, a target on which time-resolved spectroscopy by the quantum absorption spectroscopy system according to the present disclosure can be performed is not limited to the time response of the sample to the light stimulus.

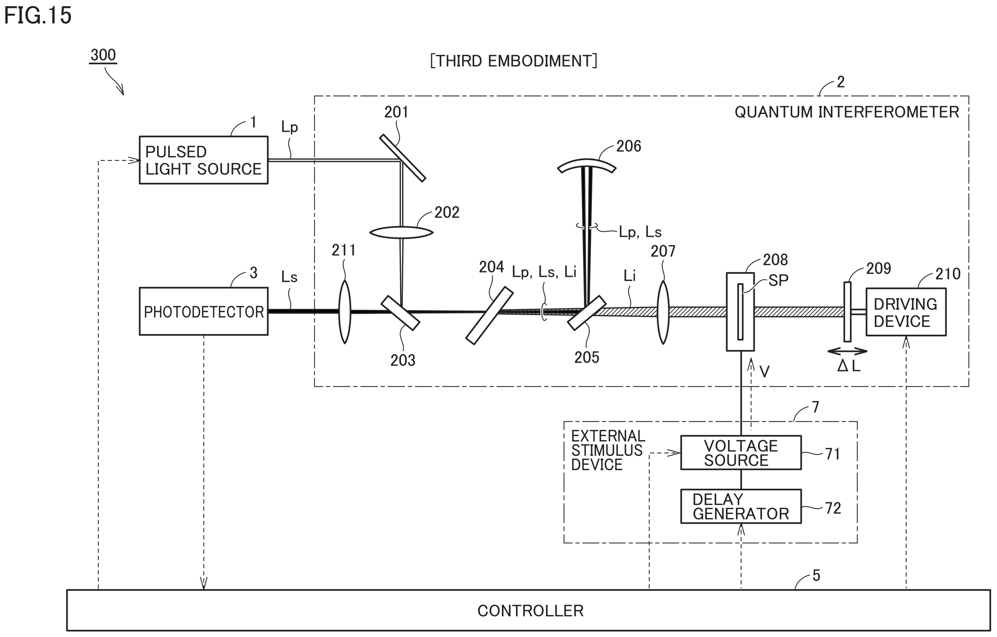

Fig. 15 shows an example of an overall configuration of a quantum absorption spectroscopy system according to a third embodiment. A quantum absorption spectroscopy system 300 is different from quantum absorption spectroscopy system 100 according to the first embodiment (see Fig. 1) in that quantum absorption spectroscopy system 300 includes an external stimulus device 7 instead of light stimulus device 4.

External stimulus device 7 includes, for example, a voltage source 71 and a delay generator 72. Voltage source 71 is configured to apply a voltage (an external electric field) to the sample in accordance with a control command from controller 5. Delay generator 72 delays the timing of application of the voltage from voltage source 71 with respect to the timing of emission of the pulsed laser light from pulsed light source 1 in accordance with a control command from controller 5, for example.

External stimulus device 7 may only be configured to be capable of applying an external stimulus to the sample and a type of the external stimulus is not particularly limited. For example, external stimulus device 7 may include a current source that applies a current to the sample, or may include a magnetic force source (such as an electromagnet) that applies an external magnetic field to the sample, or may include a pressure source (such as a compressor or a pump) that applies a pressure to the sample, or may include a heat source (such as an electric heater) that applies heat to the sample. External stimulus device 7 may be configured to induce a chemical reaction in the sample by bringing a substance (material) different from the sample into contact with the sample. Two or more external stimuli may be applied to the sample at the same time or in sequence. Since the remaining configuration of quantum absorption spectroscopy system 300 is the same as the corresponding configuration in quantum absorption spectroscopy system 100, description will not be repeated.

Similarly to the first embodiment, the third embodiment can also achieve time-resolved spectroscopy with high accuracy. In addition, according to the third embodiment, time-resolved spectroscopy can be performed on a time response of the sample to the external stimulus (such as the electric field, the magnetic field, the pressure, or the heat) different from the light stimulus.

[Fourth Embodiment]

In the first embodiment, the example having the configuration in which quantum interferometer 2 of quantum absorption spectroscopy system 100 has a configuration similar to that of the Michelson interferometer has been described. In a fourth embodiment, a configuration in which a quantum absorption spectroscopy system includes a quantum interferometer similar to a Mach-Zehnder interferometer will be described.

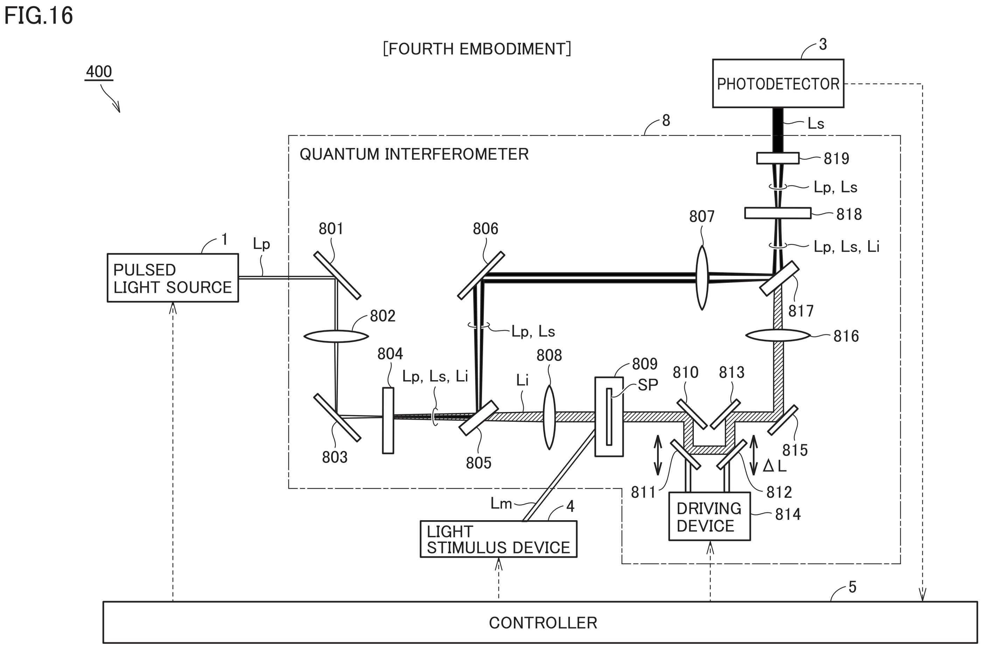

Fig. 16 shows an example of an overall configuration of a quantum absorption spectroscopy system according to the fourth embodiment. A quantum absorption spectroscopy system 400 is different from quantum absorption spectroscopy system 100 according to the first embodiment (see Fig. 1) in that quantum absorption spectroscopy system 400 includes a quantum interferometer 8 instead of quantum interferometer 2.

Quantum interferometer 8 is a quantum interferometer similar to a Mach-Zehnder interferometer. Quantum interferometer 8 includes, for example, a mirror 801, a lens 802, a mirror 803, a first nonlinear optical crystal 804, a dichroic mirror 805, a mirror 806, lenses 807 and 808, a sample holder 809, a mirror 810, moving mirrors 811 and 812, a mirror 813, a driving device 814, a mirror 815, a lens 816, a dichroic mirror 817, a second nonlinear optical crystal 818, and a filter 819.

Mirror 801 is disposed between pulsed light source 1 and lens 802. Mirror 801 guides the pump light from pulsed light source 1 to lens 802.

Lens 802 is disposed between mirror 801 and mirror 803. Lens 802 is adjusted to collect the pump light from mirror 801 and focus the collected pump light on first nonlinear optical crystal 804 through mirror 803.

First nonlinear optical crystal 804 is disposed between mirror 803 and dichroic mirror 805. First nonlinear optical crystal 804 generates a photon pair of a signal photon and an idler photon by the SPDC of the pump light. Although first nonlinear optical crystal 804 is a type-I lithium niobate crystal in this example, the material of first nonlinear optical crystal 804 is not particularly limited.

Dichroic mirror 805 is disposed between first nonlinear optical crystal 804 and mirror 806 and between first nonlinear optical crystal 804 and lens 808. Dichroic mirror 805 reflects the visible light (the pump light and the signal light) and allows the infrared light (the idler light) to pass therethrough. The signal light and the pump light are reflected by mirror 806, and then, is collected by lens 807 and focused on second nonlinear optical crystal 818. The idler light is converted into parallel light by lens 808 and is applied to a sample in sample holder 809. Thereafter, the idler light propagates to mirror 810, moving mirror 811 and moving mirror 812 in this order.

Driving device 814 is configured to change sweeping distance ΔL within a predetermined range including the position of ΔL = 0 where a signal light path length and an idler light path length coincide with each other, by moving moving mirrors 811 and 812 back and forth in accordance with a control command from controller 5. Driving device 814 is, for example, a movable stage and includes a motor driving device. The idler light propagating through moving mirrors 811 and 812 further passes through mirrors 813 and 815 and reaches lens 816.

Lens 816 is disposed between mirror 815 and dichroic mirror 817. Lens 816 is adjusted to collect the idler light from mirror 815 and focus the collected idler light on second nonlinear optical crystal 818 through dichroic mirror 817.

Dichroic mirror 817 is disposed between lens 807 and second nonlinear optical crystal 818 and between lens 816 and second nonlinear optical crystal 818. Similarly to dichroic mirror 805, dichroic mirror 817 reflects the visible light and allows the infrared light to pass therethrough. Thus, the pump light, the signal light and the idler light are all applied to second nonlinear optical crystal 818.

Second nonlinear optical crystal 818 is disposed between dichroic mirror 817 and filter 819. Second nonlinear optical crystal 818 contains the same material as that of first nonlinear optical crystal 804 and generates a photon pair of a signal photon and an idler photon by the SPDC of the pump light.

Filter 819 is disposed between second nonlinear optical crystal 818 and photodetector 3. Filter 819 allows the signal light from second nonlinear optical crystal 818 to pass therethrough. However, the pump light and the idler light are removed by filter 819.

Although not shown due to space constraints, light stimulus device 4 is equivalent to that described in the first embodiment (see Fig. 1). In this case, a delay generator is disposed on a measurement light path. However, the delay generator may be disposed on a pump light path as in the modification (see Fig. 13) of the first embodiment.

Similarly to the first embodiment, the fourth embodiment can also achieve time-resolved spectroscopy with high accuracy. In addition, in the first embodiment (Michelson interferometer), the idler light passes through the sample twice, which may cause indefiniteness in delay time $\delta\tau$ between the pump light and the measurement light. In contrast, in the fourth embodiment (Mach-Zehnder interferometer), the idler light passes through the sample only once, which does not cause indefiniteness in delay time $\delta\tau$. Therefore, according to the fourth embodiment, time-resolved spectroscopy with higher accuracy can be achieved.

[Fifth Embodiment]

In the first to fourth embodiments, the configuration in which the pump light source is the pulsed light source has been described. In a fifth embodiment, a configuration in which a pump light source is a light source that emits broadband light will be described.

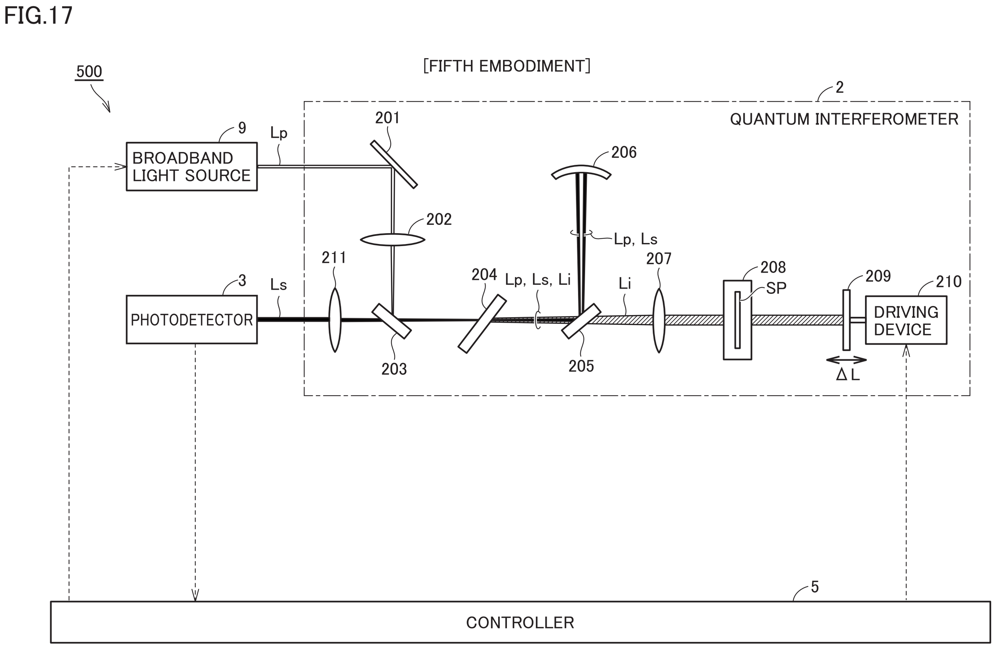

Fig. 17 shows an example of an overall configuration of a quantum absorption spectroscopy system according to the fifth embodiment. A quantum absorption spectroscopy system 500 is different from quantum absorption spectroscopy system 100 according to the first embodiment (see Fig. 1) in that quantum absorption spectroscopy system 500 includes a broadband light source 9 instead of pulsed light source 1, and in that quantum absorption spectroscopy system 500 does not include light stimulus device 4.

Broadband light source 9 emits broadband light for exciting nonlinear optical crystal 204 in quantum interferometer 2. In this example, broadband light source 9 is a light source that emits broadband continuous light and is configured by causing an SLD light source to operate in CW behavior, for example. The SLD light source has a band of, for example, 30 to 200 nm. Broadband light source 9 may be an amplified spontaneous emission (ASE) light source. The ASE light source has a band of, for example, 30 to 300 nm. Broadband light source 9 may be configured by causing a white laser light source to operate in CW behavior. The white laser light source has a band of, for example, 10 to 1000 nm. Broadband light source 9 may be configured by combining a plurality of narrowband light sources (CW laser light sources) having different center wavelengths. In this case, a band of 5 to 1000 nm can be achieved, for example. Similarly to the pulsed laser light, the broadband light may have any shape. The broadband light may have a Gaussian shape, a square wave shape, or any other shape.

According to the above-described equation (17), complex transmittance spectrum $\tau_{measure}(k)$ is not dependent on the shape of pump light spectrum $\mu$. However, the equation (17) does not include the limitation about whether the pump light is CW light or pulsed light. Therefore, the pump light may be CW light. By using the broadband light having a spectral width broader than that of the monochromatic light as the pump light, a broader entangled photon pair generation band can be achieved.

It has been the conventional technical common knowledge that special elements such as a chirp-type QPM device is required to achieve a broader entangled photon pair generation band (see, for example, Figs. 7, 20 and 21 of PTL 1). However, these elements are expensive because of the necessity of high-level manufacturing techniques. According to the present embodiment, simply by preparing the broadband light source without preparing the special elements, a broader entangled photon pair generation band can be achieved.

However, quantum absorption spectroscopy system 500 according to the fifth embodiment does not deny various combinations of the broadband light source and the QPM device. The broadband light source may be combined with various types of QPM devices such as a chirp-type QPM device, a fan-type QPM device or a ridge-waveguide-type QPM device.

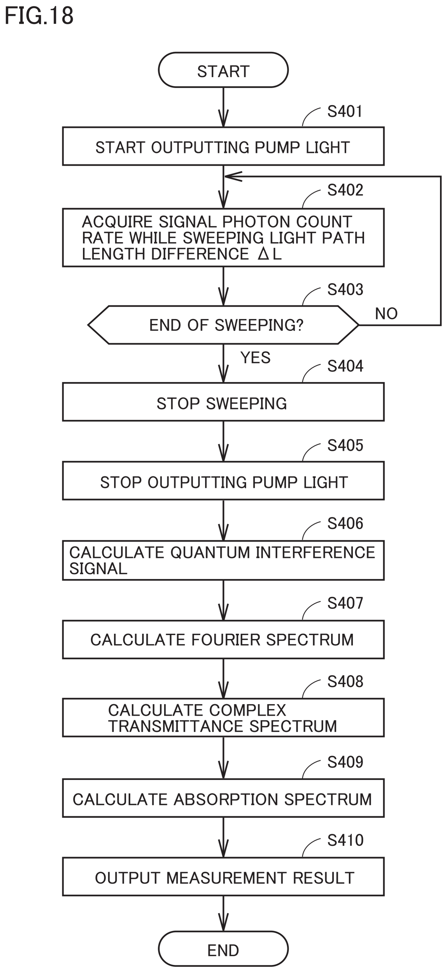

Fig. 18 is a flowchart showing an example of a process procedure of a quantum absorption spectroscopy method in the fifth embodiment. The process procedure shown in this flowchart is different from the process procedure in the first embodiment (see Fig. 3) in that the process procedure shown in this flowchart does not include the processing for setting and scanning delay time $\delta\tau$ between the pump light and the measurement light (S101, S103 and S108), and in that the process procedure shown in this flowchart does not include the processing for starting and stopping outputting the measurement light (S102 and S109). Since the remaining processing is basically equivalent, detailed description will not be repeated.

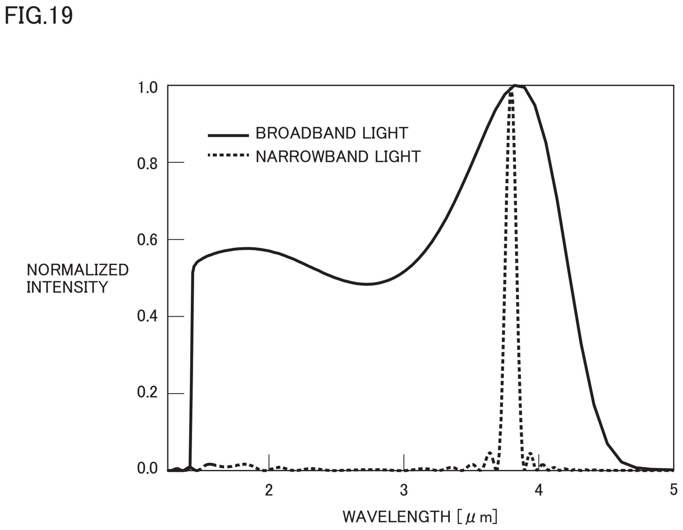

Fig. 19 shows an example of simulation results about a difference in entangled photon pair generation band, which is caused by a difference in pump light source. The horizontal axis represents a wavelength. The vertical axis represents a normalized spectrum intensity.

A simulation result when the broadband light is used is indicated by a solid line. The broadband continuous light from the SLD light source was assumed as the broadband light and the light having a center wavelength of 840 nm and a spectral line width of 40 nm was used. On the other hand, a simulation result when the narrowband light is used is indicated by a dashed line. The monochromatic light having a center wavelength of 840 nm and a spectral line width of 0.4 nm was used as the narrowband light. In both of the case in which the broadband light was used and the case in which the narrowband light was used, it was assumed that quantum interferometer 2 included a QPM device (specifically, an element having a polarization reversal cycle of A = 24 $\mu$m and containing lithium tantalate (LiTaO$_3$)) instead of nonlinear optical crystal 204.

It can be seen from Fig. 19 that by employing broadband light source 9 as the pump light source, a significantly broader entangled photon pair generation band in quantum interferometer 2 is achieved, as compared with the case in which the narrowband light source (monochromatic light source) is employed.

Next, broadening of an entangled photon pair generation band will be described from a theoretical perspective. An amount of generation of an entangled photon pair having signal frequency $\omega_s$ and idler frequency $\omega_i$ is determined depending on two-photon field amplitude $F(\omega_s, \omega_i)$. As described in the equation (2) in the first embodiment, two-photon field amplitude $F(\omega_s, \omega_i)$ is proportional to the product of phase matching condition $D(\omega_s, \omega_i)$ and pump light spectrum $\mu(\omega_p)$ (refer to the following equation (23)).

[Math. 21]

$$F(\omega_s, \omega_i) \propto D(\omega_s, \omega_i)\mu\big(\omega_p = \omega_s + \omega_i\big) \cdots (23)$$

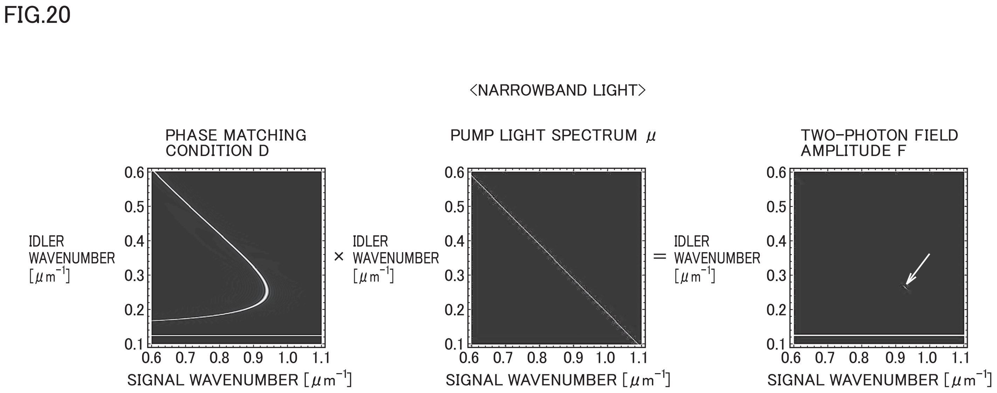

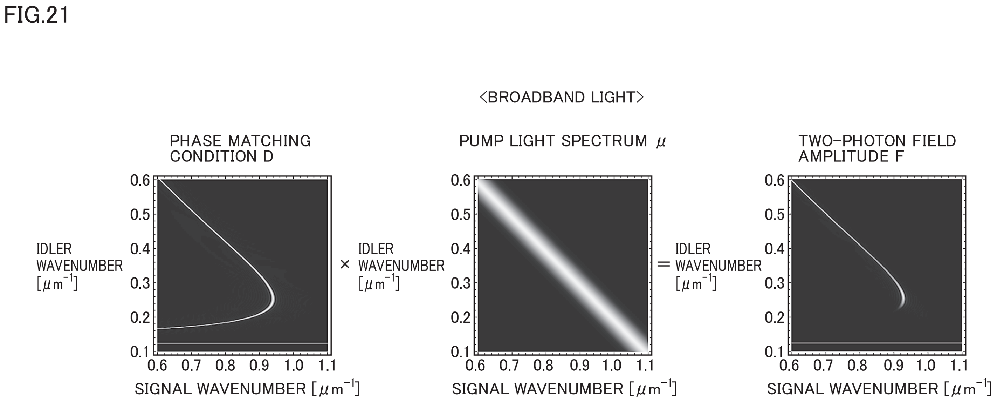

Fig. 20 is a diagram for illustrating a size of an entangled photon pair generation band, when the narrowband light source is used. Fig. 21 is a diagram for illustrating a size of an entangled photon pair generation band, when the broadband light source is used. Phase matching condition $D(\omega_s, \omega_i)$ is shown on the left side. Pump light spectrum $\mu(\omega_p)$ is shown in the center. Two-photon field amplitude $F(\omega_s, \omega_i)$ is shown on the right side. The horizontal axis represents the signal wavenumber, and the vertical axis represents the idler wavenumber.

First, referring to the left figure in Fig. 20 and the left figure in Fig. 21, the common QPM device is included in quantum interferometer 2. Therefore, phase matching condition $D(\omega_s, \omega_i)$ is equal regardless of whether the pump light source is the narrowband light source or the broadband light source.

As shown in the central figure in Fig. 20 and the central figure in Fig. 21, the relationship between signal frequency $\omega_s$ and idler frequency $\omega_i$ in the pump light that can generate an entangled photon pair is illustrated as a straight line ($\omega_p = \omega_s + \omega_i$). A difference between the narrowband light and the broadband light is indicated by the thickness (distribution) of this straight line. The straight line was thicker when the broadband light was used than when the narrowband light was used. This means that by employing the broadband light, a frequency band permitted in pump light spectrum $\mu$ (a frequency band that can be used as an excitation photon for generating an entangled photon pair) becomes broader.

Two-photon field amplitude F that allows generation of an entangled photon pair is limited to a combination of frequencies ($\omega_s, \omega_i$) in which both phase matching condition D and pump light spectrum $\mu$ take large values. A size of a distribution region of two-photon field amplitude F shown in the right figure in Fig. 20 and the right figure in Fig. 21 indicates a size of a frequency band where an entangled photon pair is generated. When the narrowband light was used, the distribution region of two-photon field amplitude F where an entangled photon pair was generated was very narrow (refer to a white arrow in the right figure in Fig. 20). In contrast, when the broadband light was used, the distribution region of two-photon field amplitude F became significantly broader (see the right figure in Fig. 21).

As described above, in the fifth embodiment, the broadband light source (more specifically, the broadband continuous light source) is employed as the pump light source for generating an entangled photon pair. According to the present inventors' findings (refer to, particularly, the equation (17)), when the broadband light source is employed as the pump light source, a broader entangled photon pair generation band can be achieved without employing special elements such as a chirp-type QPM device. Therefore, according to the fifth embodiment, a broader spectral bandwidth (a broader wavelength range in which spectroscopy is possible) can be achieved with a simple system configuration.

In the first to fourth embodiments, the configuration in which the pump light source is the pulsed light source has been described. In the fifth embodiment, the configuration in which the pump light source is the broadband light source has been described. When the pump light source is the SLD light source or the white laser light source, the pump light source can also be used as a broadband pulsed light source by causing the pump light source to operate in pulsed behavior. The same applies to the case in which the pump light source includes a plurality of narrowband light sources having different center wavelengths. As described above, the pump light may be the narrowband pulsed light, or may be the broadband pulsed light, or may be the broadband continuous light. That is, the pump light may be at least one of the pulsed light and the broadband light.

[Clauses]

Finally, various aspects of the present disclosure will be summarized as clauses.

<Clause 1>

A quantum absorption spectroscopy method comprising:

outputting pump light to a quantum interferometer, the pump light being at least one of pulsed light and broadband light, wherein
the quantum interferometer is configured to cause quantum interference between a plurality of physical processes in each of which an entangled photon pair of a signal photon and an idler photon is generated from the pump light, and a sample is disposed on a propagation path of the idler photon;
the quantum absorption spectroscopy method further comprising:

acquiring at least one quantum interference signal from the quantum interferometer, each of the at least one quantum interference signal being a signal corresponding to the number of the signal photon detected by a photodetector when a phase of one of the signal photon and the idler photon is changed; and
calculating an absorption spectroscopy characteristic of the sample based on at least one Fourier spectrum obtained by Fourier transform of the at least one quantum interference signal.

<Clause 2>

The quantum absorption spectroscopy method according to Clause 1, wherein
the pump light is the pulsed light.

<Clause 3>

The quantum absorption spectroscopy method according to Clause 2, further comprising

applying, to the sample, an external stimulus for which a time gap with the pulsed light is set, wherein
the acquiring at least one quantum interference signal is acquiring at least one quantum interference signal when the external stimulus is applied to the sample, and
the calculating an absorption spectroscopy characteristic includes calculating a time response of the sample to the external stimulus.

<Clause 4>

The quantum absorption spectroscopy method according to Clause 3, further comprising

scanning the time gap, wherein
the acquiring at least one quantum interference signal when the external stimulus is applied to the sample includes acquiring a plurality of quantum interference signals different in the time gap, and
the calculating a time response of the sample includes calculating a time-resolved spectrum based on a plurality of Fourier spectrums obtained by Fourier transform of the plurality of quantum interference signals, the time-resolved spectrum indicating the time response to the external stimulus.

<Clause 5>

The quantum absorption spectroscopy method according to Clause 3 or 4, wherein
the applying an external stimulus includes irradiating the sample with light.

<Clause 6>

The quantum absorption spectroscopy method according to any one of Clauses 3 to 5, wherein
the applying an external stimulus includes applying at least one of an electric field, a magnetic field, a pressure, and heat to the sample.

<Clause 7>

The quantum absorption spectroscopy method according to any one of Clauses 1 to 6, wherein
the pump light is the broadband light.

<Clause 8>

A quantum absorption spectroscopy system comprising:

a light source that emits pump light, the pump light being at least one of pulsed light and broadband light;
a quantum interferometer configured to cause quantum interference between a plurality of physical processes in each of which an entangled photon pair of a signal photon and an idler photon is generated from the pump light, a sample being disposed on a propagation path of the idler photon;

a photodetector that detects the signal photon; and

a processor configured to calculate an absorption spectroscopy characteristic of the sample based on a result of detection by the photodetector, wherein

the processor is configured to:

acquire at least one quantum interference signal from the quantum interferometer, each of the at least one quantum interference signal being a signal corresponding to the number of the signal photon detected by the photodetector when a phase of one of the signal photon and the idler photon is changed, and

calculate the absorption spectroscopy characteristic based on at least one Fourier spectrum obtained by Fourier transform of the at least one quantum interference signal.

<Clause 9>

The quantum absorption spectroscopy system according to Clause 8, wherein
the light source is a pulsed light source that emits the pulsed light.

<Clause 10>

The quantum absorption spectroscopy system according to Clause 9, wherein

an external stimulus for which a time gap with the pulsed light is set is applied to the sample, and

the processor is configured to calculate a time response of the sample to the external stimulus based on at least one quantum interference signal when the external stimulus is applied to the sample.

<Clause 11>

The quantum absorption spectroscopy system according to Clause 10, wherein
the processor is configured to:

acquire a plurality of quantum interference signals different in the time gap by scanning the time gap, and

calculate a time-resolved spectrum based on a plurality of Fourier spectrums obtained by Fourier transform of the plurality of quantum interference signals, the time-resolved spectrum indicating the time response of the sample to the external stimulus.

<Clause 12>

The quantum absorption spectroscopy system according to Clause 10 or 11, further comprising

an optical element that divides the pulsed light into first pulsed light and second pulsed light, wherein

the first pulsed light generates the entangled photon pair by spontaneous parametric down-conversion or spontaneous four-wave mixing of the pulsed light, and

the second pulsed light induces a photoreaction of the sample as the external stimulus.

<Clause 13>

The quantum absorption spectroscopy system according to any one of Clauses 8 to 12, wherein
the light source is a broadband light source that emits the broadband light.

<Clause 14>

The quantum absorption spectroscopy system according to Clause 13, wherein
the broadband light source includes a superluminescent diode (SLD) light source, an amplified spontaneous emission (ASE) light source, a white laser light source, or a plurality of narrowband light sources having different center wavelengths.

<Clause 15>

The quantum absorption spectroscopy system according to any one of Clauses 8 to 14, wherein the quantum interferometer is a Mach-Zehnder interferometer in which the idler photon passes through the sample only once.

It should be understood that the embodiments disclosed herein are illustrative and non-restrictive in every respect. The scope of the present disclosure is defined by the terms of the claims, rather than the description of the embodiments above, and is intended to include any modifications within the scope and meaning equivalent to the terms of the claims.

REFERENCE SIGNS LIST

100, 101, 200, 300, 400 quantum absorption spectroscopy system; 1 pulsed light source; 2, 2A quantum interferometer; 201 mirror; 202 lens; 203 dichroic mirror; 204 nonlinear optical crystal; 205 dichroic mirror; 206 fixed mirror; 207 lens; 208 sample holder; 209 moving mirror; 210 driving device; 211 lens; 212 delay generator; 3 photodetector; 4, 4A light stimulus device; 41 pulsed light source; 42 delay generator; 43 mirror; 44 beam splitter; 45 mirror; 5 controller; 51 processor; 52 memory; 53 storage; 54 input device; 55 output device; 56 communication device; 57 bus; 6 light stimulus device; 7 external stimulus device; 71 voltage source; 72 delay generator; 8 quantum interferometer; 801 mirror; 802 lens; 803 mirror; 804 first nonlinear optical crystal; 805 dichroic mirror; 806 mirror; 807, 808 lens; 809 sample holder; 810 mirror; 811, 812 moving mirror; 813 mirror; 814 driving device; 815 mirror; 816 lens; 817 dichroic mirror; 818 second nonlinear optical crystal; 819 filter; 9 broadband light source.

**Claims**

1. A quantum absorption spectroscopy method comprising:

   outputting pump light to a quantum interferometer, the pump light being at least one of pulsed light and broadband light, wherein
   the quantum interferometer is configured to cause quantum interference between a plurality of physical processes in each of which an entangled photon pair of a signal photon and an idler photon is generated from the pump light, and a sample is disposed on a propagation path of the idler photon;
   the quantum absorption spectroscopy method further comprising:

   acquiring at least one quantum interference signal from the quantum interferometer, each of the at least one quantum interference signal being a signal corresponding to the number of the signal photon detected by a photodetector when a phase of one of the signal photon and the idler photon is changed; and
   calculating an absorption spectroscopy characteristic of the sample based on at least one Fourier spectrum obtained by Fourier transform of the at least one quantum interference signal.

2. The quantum absorption spectroscopy method according to claim 1, wherein the pump light is the pulsed light.

3. The quantum absorption spectroscopy method according to claim 2, further comprising

   applying, to the sample, an external stimulus for which a time gap with the pulsed light is set, wherein
   the acquiring at least one quantum interference signal is acquiring at least one quantum interference signal when the external stimulus is applied to the sample, and
   the calculating an absorption spectroscopy characteristic includes calculating a time response of the sample to the external stimulus.

4. The quantum absorption spectroscopy method according to claim 3, further comprising

   scanning the time gap, wherein
   the acquiring at least one quantum interference signal when the external stimulus is applied to the sample includes acquiring a plurality of quantum interference signals different in the time gap, and
   the calculating a time response of the sample includes calculating a time-resolved spectrum based on a plurality of Fourier spectrums obtained by Fourier transform of the plurality of quantum interference signals, the time-resolved spectrum indicating the time response to the external stimulus.

5. The quantum absorption spectroscopy method according to claim 3 or 4, wherein
the applying an external stimulus includes irradiating the sample with light.

6. The quantum absorption spectroscopy method according to claim 3 or 4, wherein
the applying an external stimulus includes applying at least one of an electric field, a magnetic field, a pressure, and heat to the sample.

7. The quantum absorption spectroscopy method according to any one of claims 1 to 4, wherein
the pump light is the broadband light.

8. A quantum absorption spectroscopy system comprising:

a light source that emits pump light, the pump light being at least one of pulsed light and broadband light;
a quantum interferometer configured to cause quantum interference between a plurality of physical processes in each of which an entangled photon pair of a signal photon and an idler photon is generated from the pump light, a sample being disposed on a propagation path of the idler photon;
a photodetector that detects the signal photon; and
a processor configured to calculate an absorption spectroscopy characteristic of the sample based on a result of detection by the photodetector, wherein
the processor is configured to:

acquire at least one quantum interference signal, each of the at least one quantum interference signal being a signal corresponding to the number of the signal photon detected by the photodetector when a phase of one of the signal photon and the idler photon is changed, and
calculate the absorption spectroscopy characteristic based on at least one Fourier spectrum obtained by Fourier transform of the at least one quantum interference signal.

9. The quantum absorption spectroscopy system according to claim 8, wherein
the light source is a pulsed light source that emits the pulsed light.

10. The quantum absorption spectroscopy system according to claim 9, wherein

an external stimulus for which a time gap with the pulsed light is set is applied to the sample, and
the processor is configured to calculate a time response of the sample to the external stimulus based on at least one quantum interference signal when the external stimulus is applied to the sample.

11. The quantum absorption spectroscopy system according to claim 10, wherein
the processor is configured to:

acquire a plurality of quantum interference signals different in the time gap by scanning the time gap, and
calculate a time-resolved spectrum based on a plurality of Fourier spectrums obtained by Fourier transform of the plurality of quantum interference signals, the time-resolved spectrum indicating the time response of the sample to the external stimulus.

12. The quantum absorption spectroscopy system according to claim 10 or 11, further comprising

an optical element that divides the pulsed light into first pulsed light and second pulsed light, wherein
the first pulsed light generates the entangled photon pair by spontaneous parametric down-conversion or spontaneous four-wave mixing of the pulsed light, and
the second pulsed light induces a photoreaction of the sample as the external stimulus.

13. The quantum absorption spectroscopy system according to any one of claims 8 to 11, wherein
the light source is a broadband light source that emits the broadband light.

14. The quantum absorption spectroscopy system according to claim 13, wherein
the broadband light source includes a superluminescent diode (SLD) light source, an amplified spontaneous emission (ASE) light source, a white laser light source, or a plurality of laser light sources having different center wavelengths.

15. The quantum absorption spectroscopy system according to any one of claims 8 to 11, wherein the quantum interferometer is a Mach-Zehnder interferometer in which the idler photon passes through the sample only once.

FIG.1

FIG.2

CONTROLLER 5

PROCESSOR 51

MEMORY 52

STORAGE 53

57

INPUT DEVICE 54

OUTPUT DEVICE 55

COMMUNICATION DEVICE 56

FIG.3

```
                    ┌─────────┐
                    │  START  │
                    └────┬────┘
                         │         ⟋ S101
          ┌──────────────▼──────────────┐
          │ SET SCANNING CONDITIONS FOR │
          │ SCANNING TIME DELAY δτ      │
          └──────────────┬──────────────┘
                         │         ⟋ S102
          ┌──────────────▼──────────────┐
          │ START OUTPUTTING PUMP       │
          │ LIGHT AND MEASUREMENT LIGHT │
          └──────────────┬──────────────┘
                         │◄──────────────────────────────┐
                         │         ⟋ S103                 │
          ┌──────────────▼──────────────┐                 │
          │        SET δτ(N)            │                 │
          └──────────────┬──────────────┘                 │
                         │◄────────────────────┐          │
                         │         ⟋ S104       │          │
          ┌──────────────▼──────────────┐       │          │
          │ ACQUIRE SIGNAL PHOTON COUNT │       │          │
          │ RATE WHILE SWEEPING LIGHT   │       │          │
          │ PATH LENGTH DIFFERENCE ΔL   │       │          │
          └──────────────┬──────────────┘       │          │
                         │         ⟋ S105        │     ⟋ S108
                   ╱─────▼─────╲  NO     ┌──────────────────────┐
                  ╱ END OF      ╲───────►│ δτ(N) → δτ(N+1)      │
                  ╲ SWEEPING?   ╱        └──────────────────────┘
                   ╲─────┬─────╱                        ▲
                         │ YES    ⟋ S106                 │
          ┌──────────────▼──────────────┐               │
          │       STOP SWEEPING         │               │
          └──────────────┬──────────────┘               │
                         │         ⟋ S107                │
                   ╱─────▼─────╲  NO                     │
                  ╱ HAS δτ(N)   ╲─────────────────────────┘
                  ╲ REACHED END ╱
                   ╲ VALUE?─────╱
                         │ YES    ⟋ S109
          ┌──────────────▼──────────────┐
          │ STOP OUTPUTTING PUMP        │
          │ LIGHT AND MEASUREMENT LIGHT │
          └──────────────┬──────────────┘
                         │         ⟋ S110
          ┌──────────────▼──────────────┐
          │ CALCULATE QUANTUM           │
          │ INTERFERENCE SIGNAL         │
          └──────────────┬──────────────┘
                         │         ⟋ S111
          ┌──────────────▼──────────────┐
          │ CALCULATE FOURIER SPECTRUM  │
          └──────────────┬──────────────┘
                         │         ⟋ S112
          ┌──────────────▼──────────────┐
          │ CALCULATE COMPLEX           │
          │ TRANSMITTANCE SPECTRUM      │
          └──────────────┬──────────────┘
                         │         ⟋ S113
          ┌──────────────▼──────────────┐
          │ CALCULATE ABSORPTION        │
          │ SPECTRUM                    │
          └──────────────┬──────────────┘
                         │         ⟋ S114
          ┌──────────────▼──────────────┐
          │ OUTPUT MEASUREMENT RESULT   │
          └──────────────┬──────────────┘
                         │
                    ┌────▼────┐
                    │   END   │
                    └─────────┘
```

FIG.4

```
                    ┌─────────────┐
                    │    START    │
                    └──────┬──────┘
                           │         ┌─ S201
              ┌────────────▼────────────────┐
              │ SET SCANNING CONDITIONS FOR │
              │ SCANNING TIME DELAY δτ      │
              └────────────┬────────────────┘
                           │         ┌─ S202
              ┌────────────▼────────────────┐
              │ START OUTPUTTING PUMP       │
              │ LIGHT AND MEASUREMENT LIGHT │
              └────────────┬────────────────┘
                           │         ┌─ S203
              ┌────────────▼────────────────┐
              │        SET δτ(N)            │
              └────────────┬────────────────┘
                           │         ┌─ S204
              ┌────────────▼────────────────┐
              │ ACQUIRE SIGNAL PHOTON COUNT │
              │ RATE WHILE SWEEPING LIGHT   │
              │ PATH LENGTH DIFFERENCE ΔL   │
              └────────────┬────────────────┘
                           │         ┌─ S205
                      END OF SWEEPING?  ──NO──┐
                           │ YES
                           │         ┌─ S206
              ┌────────────▼────────────────┐
              │        STOP SWEEPING        │
              └────────────┬────────────────┘
```

S213  δτ(N)→δτ(N+1)

SET SCANNING CONDITIONS FOR SCANNING TIME DELAY δτ    S201

START OUTPUTTING PUMP LIGHT AND MEASUREMENT LIGHT    S202

SET δτ(N)    S203

ACQUIRE SIGNAL PHOTON COUNT RATE WHILE SWEEPING LIGHT PATH LENGTH DIFFERENCE ΔL    S204

END OF SWEEPING?    S205    NO

STOP SWEEPING    S206

CALCULATE QUANTUM INTERFERENCE SIGNAL    S207

CALCULATE FOURIER SPECTRUM    S208

CALCULATE COMPLEX TRANSMITTANCE SPECTRUM    S209

CALCULATE ABSORPTION SPECTRUM    S210

OUTPUT MEASUREMENT RESULT    S211

HAS δτ(N) REACHED END VALUE?    S212    NO

YES    S214

STOP OUTPUTTING PUMP LIGHT AND MEASUREMENT LIGHT

END

FIG.5

```
                    ┌─────────┐
                    │  START  │
                    └─────────┘
                         │
                         ▼              S301
        ┌──────────────────────────────────┐
        │ SET SCANNING CONDITIONS FOR      │
        │ SCANNING TIME DELAY δτ           │
        └──────────────────────────────────┘
                         │
                         ▼              S302
        ┌──────────────────────────────────┐
        │ START OUTPUTTING PUMP            │
        │ LIGHT AND MEASUREMENT LIGHT      │◄──────────┐
        └──────────────────────────────────┘           │
                         │                              │
                         ▼              S303            │
        ┌──────────────────────────────────┐           │
        │ SET LIGHT PATH LENGTH            │◄──────┐    │
        │ DIFFERENCE ΔL(N)                 │       │    │
        └──────────────────────────────────┘       │    │
                         │                          │    │
                         ▼              S304        │    │
        ┌──────────────────────────────────┐       │    │
        │ ACQUIRE SIGNAL PHOTON COUNT      │       │    │
        │ RATE WHILE SCANNING δτ           │       │    │
        └──────────────────────────────────┘       │    │
                         │                          │    │
                         ▼   S305        NO         │    │
        ◄───── END OF SCANNING? ─────────────────────┘    │
                         │ YES                             │
                         ▼   S306                          │
        ┌──────────────────────────────────┐               │
        │         STOP SCANNING            │      S308     │
        └──────────────────────────────────┘   ┌─────────────────┐
                         │                      │ ΔL(N)→ΔL(N+1)   │
                         ▼   S307      NO        └─────────────────┘
        ◄── HAS ΔL(N) REACHED END VALUE? ──────────────┘
                         │ YES    S309
        ┌──────────────────────────────────┐
        │ STOP OUTPUTTING PUMP             │
        │ LIGHT AND MEASUREMENT LIGHT      │
        └──────────────────────────────────┘
                         │   S310
        ┌──────────────────────────────────┐
        │ CALCULATE QUANTUM                │
        │ INTERFERENCE SIGNAL              │
        └──────────────────────────────────┘
                         │   S311
        ┌──────────────────────────────────┐
        │ CALCULATE FOURIER SPECTRUM       │
        └──────────────────────────────────┘
                         │   S312
        ┌──────────────────────────────────┐
        │ CALCULATE COMPLEX                │
        │ TRANSMITTANCE SPECTRUM           │
        └──────────────────────────────────┘
                         │   S313
        ┌──────────────────────────────────┐
        │ CALCULATE ABSORPTION SPECTRUM    │
        └──────────────────────────────────┘
                         │   S314
        ┌──────────────────────────────────┐
        │ OUTPUT MEASUREMENT RESULT        │
        └──────────────────────────────────┘
                         │
                         ▼
                    ┌─────────┐
                    │   END   │
                    └─────────┘
```

# FIG.6

⟨CW LIGHT⟩

$E(t)$

$t$

$I(\omega)$

$\omega$

$\omega_p$

⟨PULSED LIGHT⟩

$\delta t$

$E(t)$

$t$

$\delta\omega = 1/\delta t$

$I(\omega)$

$\omega$

$\omega_p$

## FIG.7

<WHEN EXCITED BY CW LIGHT>

ONE-TO-ONE
CORRESPONDENCE

$\omega_i$

$\omega_s$

<WHEN EXCITED BY PULSED LIGHT>

IMPERFECT
CORRELATION

$\omega_i$

$\omega_s$

FIG.8

SP (THICKNESS d,
REFRACTIVE INDEX n)

$E_{in}$

$E_{out, 1}$

$E_{out, 2}$

$E_{out, 3}$

## FIG.9

WAVENUMBER RESOLUTION IS DEGRADED

FIG.10

<WHEN EXCITED BY CW LIGHT>

FIG.11

<WHEN EXCITED BY PULSED LIGHT>

TRANSMITTANCE

IDLER WAVENUMBER [cm$^{-1}$]

TRANSMITTANCE

IDLER WAVENUMBER [cm$^{-1}$]

EP 4 700 346 A1

FIG.12

⟨WHEN EXCITED BY CW LIGHT⟩

⟨WHEN EXCITED BY PULSED LIGHT⟩

**FIG.13**

[MODIFICATION OF FIRST EMBODIMENT]

FIG.14

[SECOND EMBODIMENT]

200

6

44

1 PULSED LIGHT SOURCE

CMD

3 PHOTODETECTOR

Lp

Lm

Ls

QUANTUM INTERFEROMETER   2

201

202

211

206

Lp, Ls

204   Lp, Ls, Li

203

205

Li

207

208   SP

209

210   DRIVING DEVICE

ΔL

45

42   DELAY GENERATOR

43

LIGHT STIMULUS DEVICE

CMD

5

CONTROLLER

EP 4 700 346 A1

38

FIG.15

[THIRD EMBODIMENT]

300

QUANTUM INTERFEROMETER — 2

1 PULSED LIGHT SOURCE — Lp — 201 — 202 — 206 — Lp, Ls

3 PHOTODETECTOR — Ls — 211 — 203 — 204 Lp, Ls, Li — 205 — Li — 207 — 208 SP — 209 — 210 DRIVING DEVICE — ΔL

V

EXTERNAL STIMULUS DEVICE — 7 — VOLTAGE SOURCE — 71 — DELAY GENERATOR — 72

CONTROLLER — 5

EP 4 700 346 A1

FIG.16

[FOURTH EMBODIMENT]

400

EP 4 700 346 A1

FIG.17

[FIFTH EMBODIMENT]

QUANTUM INTERFEROMETER — 2

500

9 — BROADBAND LIGHT SOURCE

Lp

201

206

Lp, Ls

202

211

3 — PHOTODETECTOR

Ls

204 Lp, Ls, Li

207

208 SP

209

210 DRIVING DEVICE

Li

203

205

ΔL

EP 4 700 346 A1

41

5 — CONTROLLER

FIG.18

```
              ┌─────────────┐
              │    START    │
              └──────┬──────┘
                     │                    ┌ S401
         ┌───────────▼───────────────┐
         │  START OUTPUTTING PUMP LIGHT │
         └───────────┬───────────────┘
                     │                    ┌ S402
         ┌───────────▼───────────────┐
         │ ACQUIRE SIGNAL PHOTON COUNT │
         │ RATE WHILE SWEEPING LIGHT PATH │
         │ LENGTH DIFFERENCE △L        │
         └───────────┬───────────────┘
                     │                    ┌ S403
                  ◄──┴──►  END OF SWEEPING?   NO
                     │ YES                ┌ S404
         ┌───────────▼───────────────┐
         │      STOP SWEEPING         │
         └───────────┬───────────────┘
                     │                    ┌ S405
         ┌───────────▼───────────────┐
         │  STOP OUTPUTTING PUMP LIGHT │
         └───────────┬───────────────┘
                     │                    ┌ S406
         ┌───────────▼───────────────┐
         │ CALCULATE QUANTUM INTERFERENCE │
         │ SIGNAL                      │
         └───────────┬───────────────┘
                     │                    ┌ S407
         ┌───────────▼───────────────┐
         │ CALCULATE FOURIER SPECTRUM  │
         └───────────┬───────────────┘
                     │                    ┌ S408
         ┌───────────▼───────────────┐
         │ CALCULATE COMPLEX           │
         │ TRANSMITTANCE SPECTRUM      │
         └───────────┬───────────────┘
                     │                    ┌ S409
         ┌───────────▼───────────────┐
         │ CALCULATE ABSORPTION SPECTRUM │
         └───────────┬───────────────┘
                     │                    ┌ S410
         ┌───────────▼───────────────┐
         │  OUTPUT MEASUREMENT RESULT  │
         └───────────┬───────────────┘
                     │
              ┌──────▼──────┐
              │     END     │
              └─────────────┘
```

FIG.19

FIG.20

<NARROWBAND LIGHT>

PHASE MATCHING CONDITION D × PUMP LIGHT SPECTRUM μ = TWO-PHOTON FIELD AMPLITUDE F

EP 4 700 346 A1

FIG.21

<BROADBAND LIGHT>

PHASE MATCHING
CONDITION D

PUMP LIGHT SPECTRUM $\mu$

TWO-PHOTON FIELD
AMPLITUDE F

IDLER
WAVENUMBER
$[\mu m^{-1}]$

IDLER
WAVENUMBER
$[\mu m^{-1}]$

IDLER
WAVENUMBER
$[\mu m^{-1}]$

SIGNAL WAVENUMBER $[\mu m^{-1}]$

SIGNAL WAVENUMBER $[\mu m^{-1}]$

SIGNAL WAVENUMBER $[\mu m^{-1}]$

EP 4 700 346 A1

## INTERNATIONAL SEARCH REPORT

| International application No. |
| --- |
| **PCT/JP2024/011947** |

**A. CLASSIFICATION OF SUBJECT MATTER**

*G01J 3/45*(2006.01)i; *G01N 21/35*(2014.01)i; *G01N 21/45*(2006.01)i
FI:    G01J3/45; G01N21/35; G01N21/45

According to International Patent Classification (IPC) or to both national classification and IPC

**B. FIELDS SEARCHED**

Minimum documentation searched (classification system followed by classification symbols)

G01J3/45; G01N21/35; G01N21/45

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022/186383 A1 (KYOTO UNIVERSITY) 09 September 2022 (2022-09-09) paragraphs [0025]-[0197], fig. 1-24 | 1-15 |
| A | WO 2021/117632 A1 (KYOTO UNIVERSITY) 17 June 2021 (2021-06-17) paragraphs [0029]-[0241], fig. 1-34 | 1-15 |
| A | JP 2006-242771 A (HOKKAIDO UNIV) 14 September 2006 (2006-09-14) paragraphs [0044]-[0163], fig. 1-5 | 1-15 |
| A | US 2005/0206904 A1 (GENERAL DYNAMICS ADVANCED INFORMATION SYSTEMS, INC.) 22 September 2005 (2005-09-22) paragraphs [0048]-[0071], fig. 3 | 1-15 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 April 2024** | **07 May 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915 Japan** | |
| | Telephone No. |

Form PCT/ISA/210 (second sheet) (July 2022)

46

International application No.

**PCT/JP2024/011947**

| Patent document cited in search report | | | Publication date (day/month/year) | Patent family member(s) | Publication date (day/month/year) |
|---|---|---|---|---|---|
| WO | 2022/186383 | A1 | 09 September 2022 | (Family: none) | |
| WO | 2021/117632 | A1 | 17 June 2021 | (Family: none) | |
| JP | 2006-242771 | A | 14 September 2006 | (Family: none) | |
| US | 2005/0206904 | A1 | 22 September 2005 | (Family: none) | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021117632 A

- WO 2022186383 A

**Non-patent literature cited in the description**

- **CHIARA LINDNER** ; **JACHIN KUNZ** ; **SIMON J. HERR** ; **JENS KIESSLING** ; **SEBASTIAN WOLF** ; **FRANK KUHNEMANN**. *High-sensitivity quantum sensing with pump-enhanced spontaneous parametric down-conversion*, https://doi.org/10.48550/arXiv.2208.07595

- **SATOSHI ASHIHARA** ; **SACHI FUJIOKA** ; **KAZUNORI SHIBUYA**. Temperature dependence of vibrational relaxation of the OH bending excitation in liquid H2O. *Chemical Physics Letters*, 2011, vol. 502, 57-62